# EUROPEAN PATENT APPLICATION

(11) **EP 4 773 693 A1**
(43) Date of publication of application: **08.07.2026**
(21) Application number: 24870429.8
(22) Date of filing: 09.09.2024
(51) Int. Cl.: H04W 72/0446

(54) **COMMUNICATION METHOD AND APPARATUS**

(30) Priority: 27.09.2023 CN 202311290763
(71) Applicant: HUAWEI TECHNOLOGIES CO., LTD., Shenzhen 518129 (CN)
(72) Inventor: GUAN, Lei, Shenzhen, Guangdong 518129 (CN); LI, Ruijie, Shenzhen, Guangdong 518129 (CN); JIAO, Minghan, Shenzhen, Guangdong 518129 (CN)
(74) Representative: MERH-IP Matias Erny Reichl Hoffmann Patentanwälte PartG mbB
(86) International application number: PCT/CN2024/117737
(87) International publication number: WO 2025/066884

(57) **Abstract**

A communication method and apparatus are provided, and relate to the communication field. In the method, a terminal device determines a time domain configuration of first information, where the time domain configuration of the first information indicates N transmission occasions of the first information, the first information includes at least one of system information, paging information, and paging early indication information, and N is a positive integer; receives first indication information, where the first indication information indicates M transmission occasions in the N transmission occasions; and receives the first information in one or more transmission occasions in the M transmission occasions, where M is a positive integer, and M≤N. According to the foregoing method, a part of transmission occasions of the first information can be quickly and flexibly activated or deactivated.

## Description

### CROSS-REFERENCE TO RELATED APPLICATIONS

This application claims priority to Chinese Patent Application No. 202311290763.X, filed with the China National Intellectual Property Administration on September 27, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In comparison with a 4th generation (4th generation, 4G) mobile communication system, a 5th generation (5th generation, 5G) mobile communication system uses a multiple-input multiple-output (multiple-input multiple-output, MIMO) technology, a quantity of base station channels is greatly increased, and power consumption of a base station is also increasing. Therefore, increasing attention is being paid to energy saving of the base station.

A main means of reducing the power consumption of the base station is to reduce signal sending. Then, in the communication system, the base station needs to send some air interface always-on signals for a terminal to perform cell camping, measurement, mobility management, and the like. In this case, even if service load is very low, the air interface always-on signals still need to be sent, and the air interface always-on signals are, for example, synchronization signals, system information, paging messages, and paging early indication information. As a result, impact of the air interface always-on signals on the power consumption of the base station has become a non-negligible factor.

### SUMMARY

This application provides a communication method and apparatus, to reduce impact of an air interface always-on signal on power consumption of a base station.

According to a first aspect, this application provides a communication method. The method may be performed by a terminal or a module (for example, a chip) in the terminal. The method includes: determining a time domain configuration of first information, where the time domain configuration of the first information indicates N transmission occasions of the first information, and N is a positive integer; receiving first indication information, where the first indication information indicates M transmission occasions in the N transmission occasions, M is a positive integer, and M≤N; and receiving the first information in one or more transmission occasions in the M transmission occasions.

In a possible design, the first information is air interface always-on information or an air interface always-on signal.

According to the foregoing design, a network device may flexibly activate or deactivate a part of transmission occasions of the first information by using the first indication information, and does not need to reconfigure all transmission occasions of the first information. The network device may reduce power consumption of the network device by reducing sending of the first information. For example, in light load, the network device deactivates a part of transmission occasions of the first information, and reserves the other part of transmission occasions of the first information, so that the network device can enter a sleep mode.

In a possible design, that the first indication information indicates the M transmission occasions in the N transmission occasions is specifically: the first indication information indicates a configuration of a first time window, and the configuration of the first time window includes at least one of a periodicity of the first time window, duration of the first time window, and an offset of the first time window; and the M transmission occasions are transmission occasions that are in the N transmission occasions and that are located in the first time window.

In a possible design, the first information is the system information, and the periodicity of the first time window is a system information modification period; or the first information is the paging information, and the periodicity of the first time window is a paging cycle; or the first information is the paging early indication information, and the periodicity of the first time window is a paging early indication period.

In a possible design, that the first indication information indicates the M transmission occasions in the N transmission occasions is specifically: the first indication information indicates a first transmission occasion pattern, and the first transmission occasion pattern indicates the M transmission occasions in the N transmission occasions.

In a possible design, that the first indication information indicates the M transmission occasions in the N transmission occasions is specifically: the time domain configuration of the first information indicates the N transmission occasions by using at least one of a first periodicity of the first information, first duration of the first information, and an offset of the first information; the first indication information indicates a second periodicity of the first information, and the second periodicity of the first information is greater than the first periodicity of the first information; and the M transmission occasions are transmission occasions determined in the N transmission occasions based on the second periodicity of the first information.

In a possible design, the first indication information is carried on a broadcast channel; or the first indication information is carried in downlink control information DCI.

In comparison with a conventional technology in which an SI modification indication needs to be first received, and then modified SI is received in a next SI modification period, the first indication information is carried by using the broadcast channel or the DCI, so that the time domain configuration of the modified first information can be more conveniently obtained.

In a possible design, a receiving moment of the first indication information is a first moment; and when the first information is received in the one or more transmission occasions in the M transmission occasions, the first information is received in the one or more transmission occasions in the M transmission occasions after a second moment, where the second moment is located in an update periodicity in which the first indication information is located, and the second moment is not earlier than the first moment, or the second moment is located in a next update periodicity after the update periodicity in which the first indication information is located.

According to the foregoing design, validity start time of the first indication information may be determined.

The first information includes at least one of system information, paging information, and paging early indication information.

According to a second aspect, this application provides a communication method. The method includes: determining a plurality of time domain configurations of first information; receiving second indication information, where the second indication information indicates a first time domain configuration in the plurality of time domain configurations, and the first time domain configuration indicates a transmission occasion of the first information; and receiving the first information based on the second indication information.

In a possible design, the first information is air interface always-on information or an air interface always-on signal.

According to the foregoing design, a network device may flexibly activate or deactivate the time domain configuration of the first information by using the second indication information. For example, in light load, the network device activates a time domain configuration with a small quantity of transmission occasions of the first information, to reduce power consumption for sending the first information, and save energy of a base station.

In a possible design, the first time domain configuration includes a third periodicity of the first information; and before the second indication information is received, a second time domain configuration of the first information is determined, where the second time domain configuration includes a fourth periodicity of the first information, and the fourth periodicity of the first information is less than the third periodicity of the first information.

According to the foregoing design, the second indication information may flexibly adjust the periodicity of the first information. When the fourth periodicity of the first information is less than the third periodicity of the first information, that is, a periodicity after the adjustment is greater than a periodicity before the adjustment, the periodicity of the first information can be quickly prolonged, so that the network device can enter a sleep mode, thereby reducing static power consumption of the network device and a power consumption proportion of the first information.

In a possible design, the first time domain configuration further includes third duration of the first information, the second time domain configuration further includes fourth duration of the first information, and the fourth duration is greater than the third duration.

According to the foregoing design, the second indication information may flexibly adjust the duration of the first information. When the fourth duration is greater than the third duration, that is, duration after the adjustment is less than duration before the adjustment, the duration of the first information can be shortened, thereby further reducing the static power consumption of the network device and the power consumption proportion of the first information.

In a possible design, the second indication information is carried on a broadcast channel; or the second indication information is carried in DCI.

In comparison with a conventional technology in which an SI modification indication needs to be first received, and then modified SI is received in a next SI modification period, the second indication information is carried by using the broadcast channel or the DCI, so that the time domain configuration of the modified first information can be more conveniently obtained.

In a possible design, a receiving moment of the second indication information is a third moment; and when the first information is received based on the second indication information, the first information is received at a fourth moment based on the second indication information, where the fourth moment is in an update periodicity in which the second indication information is located, and the fourth moment is not earlier than the third moment, or the fourth moment is in a next update periodicity after the update periodicity in which the second indication information is located.

According to the foregoing design, validity start time of the second indication information may be determined.

According to a third aspect, a communication method is provided. The method includes: determining a time domain configuration of a random access message, where the time domain configuration of the random access message indicates K transmission occasions of the random access message, and K is a positive integer; receiving third indication information, where the third indication information indicates S transmission occasions in the K transmission occasions, S is a positive integer, and S<K; and sending the random access message in one or more transmission occasions in the S transmission occasions.

According to the foregoing method, a network device may flexibly activate or deactivate the transmission occasion of the random access message by using the third indication information, without reconfiguring the transmission occasion of the random access message. A terminal device sends the random access message based on the third indication information, and the terminal device may reduce, by reducing sending of the random access message, power consumption for detecting the random access message by the network device. In light load, the network device may enter a sleep mode.

In a possible design, first candidate association information is determined from L pieces of candidate association information based on the third indication information, where L is greater than or equal to 2, each of the L pieces of candidate association information includes at least one of a correspondence between downlink broadcast information and a random access channel RACH occasion, an association period between the downlink broadcast information and the RACH occasion, or a quantity of RACH occasions in one RACH period.

In a possible design, the random access message is sent based on the first candidate association information.

In a possible design, the L pieces of candidate association information further include second candidate association information; and a correspondence, between the downlink broadcast information and the RACH occasion, that is indicated by the first candidate association information is the same as a correspondence, between the downlink broadcast information and the RACH occasion, that is indicated by the second candidate association information, and an association period, between the downlink broadcast information and the RACH occasion, that is indicated by the first candidate association information is different from an association period, between the downlink broadcast information and the RACH occasion, that is indicated by the second candidate association information; or a correspondence, between the downlink broadcast information and the RACH occasion, that is indicated by the first candidate association information is different from a correspondence, between the downlink broadcast information and the RACH occasion, that is indicated by the second candidate association information, and an association period, between the downlink broadcast information and the RACH occasion, that is indicated by the first candidate association information is the same as an association period, between the downlink broadcast information and the RACH occasion, that is indicated by the second candidate association information; or a correspondence, between the downlink broadcast information and the RACH occasion, that is indicated by the first candidate association information is the same as a correspondence, between the downlink broadcast information and the RACH occasion, that is indicated by the second candidate association information, an association period, between the downlink broadcast information and the RACH occasion, that is indicated by the first candidate association information is the same as an association period, between the downlink broadcast information and the RACH occasion, that is indicated by the second candidate association information, and a quantity, of RACH occasions in one RACH period, that corresponds to the first candidate association information is different from a quantity, of RACH occasions in one RACH period, that corresponds to the second candidate association information.

According to the foregoing design, the corresponding candidate association information may be determined based on the third indication information, so that accurate association information can be obtained in a timely manner.

In a possible design, that the third indication information indicates the S transmission occasions in the K transmission occasions is specifically: the third indication information indicates a configuration of a second time window, and the configuration of the second time window includes at least one of a periodicity of the second time window, duration of the second time window, and an offset of the second time window; and the S transmission occasions in the K transmission occasions are transmission occasions located in the second time window.

In a possible design, that the third indication information indicates the S transmission occasions in the K transmission occasions is specifically: the third indication information indicates a second transmission occasion pattern, and the second transmission occasion pattern indicates the S transmission occasions in the K transmission occasions.

In a possible design, that the third indication information indicates the S transmission occasions in the K transmission occasions is specifically: the time domain configuration of the random access message indicates the K transmission occasions by using at least one of a first periodicity of the random access message, first duration of the random access message, and an offset of the random access message; the third indication information indicates a second periodicity of the random access message, and the first periodicity of the random access message is less than the second periodicity of the random access message; and the S transmission occasions are transmission occasions determined in the K transmission occasions based on the second periodicity of the random access message.

In a possible design, the third indication information is carried on a broadcast channel; or the third indication information is carried in DCI.

In comparison with a conventional technology in which an SI modification indication needs to be first received, and then modified SI is received in a next SI modification period, the third indication information is carried by using the broadcast channel or the DCI, so that the time domain configuration of the modified random access message can be more conveniently obtained.

In a possible design, a receiving moment of the third indication information is a fifth moment; and when the random access message is sent in the one or more transmission occasions in the S transmission occasions, the random access message is sent in the one or more transmission occasions in the S transmission occasions after a sixth moment, where the sixth moment is located in an update periodicity in which the third indication information is located, and the sixth moment is not earlier than the fifth moment, or the sixth moment is located in a next update periodicity after the update periodicity in which the third indication information is located.

According to the foregoing design, validity start time of the third indication information may be determined.

According to a fourth aspect, this application provides a communication method. The method includes: determining a plurality of time domain configurations of a random access message; receiving fourth indication information, where the fourth indication information indicates a third time domain configuration in the plurality of time domain configurations, and the third time domain configuration indicates a transmission occasion of the random access message; and sending the random access message based on the fourth indication information.

According to the foregoing method, a network device may flexibly activate or deactivate the time domain configuration of the random access message by using the fourth indication information. For example, in light load, the network device activates a time domain configuration with a small quantity of transmission occasions of the random access message, to reduce power consumption for detecting the random access message, and save energy.

In a possible design, the third time domain configuration includes a third periodicity of the random access message; and before the fourth indication information is received, a fourth time domain configuration of the first information is determined, where the fourth time domain configuration includes a fourth periodicity of the random access message, and the fourth periodicity of the random access message is less than the third periodicity of the random access message.

According to the foregoing design, the second indication information may flexibly adjust the periodicity of the random access message. When the fourth periodicity of the random access message is less than the third periodicity of the random access message, that is, a periodicity after the adjustment is greater than a periodicity before the adjustment, the periodicity of the random access message can be quickly prolonged, so that the network device can enter a sleep mode, thereby reducing static power consumption of the network device and a power consumption proportion for detecting the random access message.

In a possible design, the third time domain configuration further includes third duration of the random access message, the fourth time domain configuration further includes fourth duration of the random access message, and the fourth duration is greater than the third duration.

According to the foregoing design, the second indication information may flexibly adjust the duration of the random access message. When the fourth duration is greater than the third duration, that is, duration after the adjustment is less than duration before the adjustment, the duration of the random access message can be shortened, thereby further reducing the static power consumption of the network device and the power consumption proportion for detecting the random access message.

In a possible design, the fourth indication information is carried on a broadcast channel; or the fourth indication information is carried in DCI.

In comparison with a conventional technology in which an SI modification indication needs to be first received, and then modified SI is received in a next SI modification period, the third indication information is carried by using the broadcast channel or the DCI, so that the time domain configuration of the modified random access message can be more conveniently obtained.

In a possible design, a receiving moment of the fourth indication information is a seventh moment; and when the random access message is sent based on the fourth indication information, the random access message is sent at an eighth moment based on the fourth indication information, where the eighth moment is in an update periodicity in which the fourth indication information is located, and the eighth moment is not earlier than the seventh moment, or the eighth moment is in a next update periodicity after the update periodicity in which the fourth indication information is located.

According to the foregoing design, validity start time of the fourth indication information may be determined.

In a possible design, first candidate association information is determined from L pieces of candidate association information based on the fourth indication information, where L is greater than or equal to 2, each of the L pieces of candidate association information includes at least one of a correspondence between downlink broadcast information and a RACH occasion, an association period between the downlink broadcast information and the RACH occasion, or a quantity of RACH occasions in one RACH period.

According to the foregoing design, the corresponding candidate association information may be determined based on the third indication information, so that accurate association information can be obtained in a timely manner.

In a possible design, the random access message is sent based on the first candidate association information.

In a possible design, the L pieces of candidate association information further include second candidate association information; and a correspondence, between the downlink broadcast information and the RACH occasion, that is indicated by the first candidate association information is the same as a correspondence, between the downlink broadcast information and the RACH occasion, that is indicated by the second candidate association information, and an association period, between the downlink broadcast information and the RACH occasion, that is indicated by the first candidate association information is different from an association period, between the downlink broadcast information and the RACH occasion, that is indicated by the second candidate association information; or a correspondence, between the downlink broadcast information and the RACH occasion, that is indicated by the first candidate association information is different from a correspondence, between the downlink broadcast information and the RACH occasion, that is indicated by the second candidate association information, and an association period, between the downlink broadcast information and the RACH occasion, that is indicated by the first candidate association information is the same as an association period, between the downlink broadcast information and the RACH occasion, that is indicated by the second candidate association information; or a correspondence, between the downlink broadcast information and the RACH occasion, that is indicated by the first candidate association information is the same as a correspondence, between the downlink broadcast information and the RACH occasion, that is indicated by the second candidate association information, an association period, between the downlink broadcast information and the RACH occasion, that is indicated by the first candidate association information is the same as an association period, between the downlink broadcast information and the RACH occasion, that is indicated by the second candidate association information, and a quantity, of RACH occasions in one RACH period, that corresponds to the first candidate association information is different from a quantity, of RACH occasions in one RACH period, that corresponds to the second candidate association information.

According to a fifth aspect, this application provides a communication method. The method includes: determining a time domain configuration of first information, where the time domain configuration of the first information indicates N transmission occasions of the first information, the first information includes at least one of system information, paging information, and paging early indication information, and N is a positive integer; determining M transmission occasions in the N transmission occasions, where M is a positive integer, and M<N; sending first indication information, where the first indication information indicates the M transmission occasions in the N transmission occasions; and sending the first information in one or more transmission occasions in the M transmission occasions.

For some possible designs and beneficial effect of the fifth aspect, refer to the first aspect. Details are not described again.

According to a sixth aspect, this application provides a communication method. The method includes: determining a plurality of time domain configurations of first information; sending second indication information, where the second indication information indicates a first time domain configuration in the plurality of time domain configurations, and the first time domain configuration indicates a transmission occasion of the first information; and sending the first information in the transmission occasion of the first information.

In a possible design, the first information is air interface always-on information or an air interface always-on signal.

For some possible designs and beneficial effect of the sixth aspect, refer to the second aspect. Details are not described again.

According to a seventh aspect, this application provides a communication method. The method includes: determining a time domain configuration of a random access message, where the time domain configuration of the random access message indicates K transmission occasions of the random access message, and K is a positive integer; sending third indication information, where the third indication information indicates S transmission occasions in the K transmission occasions, S is a positive integer, and S<K; and receiving the random access message in one or more transmission occasions in the S transmission occasions.

For some possible designs and beneficial effect of the seventh aspect, refer to the third aspect. Details are not described again.

According to an eighth aspect, this application provides a communication method. The method includes: determining a plurality of time domain configurations of a random access message; sending fourth indication information, where the fourth indication information indicates a third time domain configuration in the plurality of time domain configurations, and the third time domain configuration indicates a transmission occasion of the random access message; and receiving the random access message in the transmission occasion of the random access message.

For some possible designs and beneficial effect of the eighth aspect, refer to the fourth aspect. Details are not described again.

According to a ninth aspect, this application provides a communication apparatus. The apparatus may be used in a terminal device or a network device, and the apparatus includes units configured to perform the method according to any one of the foregoing aspects.

According to a tenth aspect, this application provides a communication device. The communication device includes at least one processing element and at least one storage element. The at least one storage element is configured to store a program and data. The at least one processing element is configured to read and execute the program and the data that are stored in the storage element, so that the method according to any one of the foregoing aspects of this application is implemented.

According to an eleventh aspect, this application further provides a computer program. When the computer program is run on a computer, the computer is enabled to perform the method according to any one of the foregoing aspects.

According to a twelfth aspect, this application provides a communication apparatus. The apparatus includes an interface circuit. The interface circuit is configured to provide an input and/or an output of a program or instructions for the at least one processor. The at least one processor is configured to execute the program or the instructions, so that the communication apparatus can implement the method according to any one of the foregoing aspects.

In a possible manner, the communication apparatus includes the at least one processor.

In a possible manner, the communication apparatus includes at least one memory, and the memory is configured to store the program or the instructions.

According to a thirteenth aspect, this application provides a computer storage medium. The storage medium stores a software program; and when the software program is read and executed by one or more processors, the method according to any one of the foregoing aspects may be implemented.

According to a fourteenth aspect, this application provides a computer program product including instructions. When the instructions are run on a computer, the computer is enabled to perform the method according to any one of the foregoing aspects.

According to a fifteenth aspect, this application provides a chip system. The chip system includes at least one chip and a memory. The at least one chip is configured to read and execute a program stored in the memory, to implement the method according to any one of the foregoing aspects.

According to a sixteenth aspect, this application provides a communication system. The system includes at least one terminal and a network device. The terminal performs the method according to any implementation of the first aspect, and the network device performs the method according to any implementation of the second aspect.

In this application, based on the implementations provided in the foregoing aspects, the implementations may be further combined to provide more implementations.

According to a seventeenth aspect, this application provides a communication method. The method includes: A network device and a terminal device determine a time domain configuration of first information, where the time domain configuration of the first information indicates N transmission occasions of the first information, and N is a positive integer; the network device sends first indication information, where the first indication information indicates M transmission occasions in the N transmission occasions, M is a positive integer, and M<N; and the terminal device receives the first information in one or more transmission occasions in the M transmission occasions.

In a possible design, the first information is air interface always-on information or an air interface always-on signal.

In a possible design, the first information includes at least one of system information, paging information, and paging early indication information.

According to an eighteenth aspect, this application provides a communication method. The method includes: A network device and a terminal device determines a plurality of time domain configurations of first information, where the first information includes at least one of system information, paging information, and paging early indication information; the network device sends second indication information, where the second indication information indicates a first time domain configuration in the plurality of time domain configurations, and the first time domain configuration indicates a transmission occasion of the first information; and the terminal device receives the first information based on the second indication information.

According to a nineteenth aspect, this application provides a communication method. The method includes: A network device and a terminal device determines a time domain configuration of a random access message, where the time domain configuration of the random access message indicates K transmission occasions of the random access message, and K is a positive integer; the network device sends third indication information, where the third indication information indicates S transmission occasions in the K transmission occasions, S is a positive integer, and S<K; and the terminal device sends the random access message in one or more transmission occasions in the S transmission occasions.

According to a twentieth aspect, this application provides a communication method. The method includes: A network device and a terminal device determines a plurality of time domain configurations of a random access message; the network device sends fourth indication information, where the fourth indication information indicates a third time domain configuration in the plurality of time domain configurations, and the third time domain configuration indicates a transmission occasion of the random access message; and the terminal device sends the random access message based on the third time domain configuration.

### BRIEF DESCRIPTION OF DRAWINGS

FIG. 1 is a diagram of an architecture of a mobile communication system to which embodiments of this application are applied;
FIG. 2 is a diagram of an SI modification period, a paging cycle, and a paging frame according to an embodiment of this application;
FIG. 3 is a diagram of a relationship between a sleep mode and static power consumption according to an embodiment of this application;
FIG. 4 is a diagram of a sleep period, a wake-up period, an active period, and static power consumption according to an embodiment of this application;
FIG. 5 is a diagram of a method for adjusting a periodicity of an air interface always-on signal in SI according to this application;
FIG. 6 is an overview flowchart of a communication method according to an embodiment of this application;
FIG. 7 is a diagram of three time windows according to an embodiment of this application;
FIG. 8 is a diagram of a relationship between a first time window and time domain configuration information of first information according to an embodiment of this application;
FIG. 9 is a diagram of a transmission occasion pattern according to an embodiment of this application;
FIG. 10 is a diagram of two periodicities of first information according to an embodiment of this application;
FIG. 11 is an overview flowchart of another communication method according to an embodiment of this application;
FIG. 12 is an overview flowchart of still another communication method according to an embodiment of this application;
FIG. 13A is a diagram 1 of first candidate association information and second candidate association information according to an embodiment of this application;
FIG. 13B is a diagram 1 of third indication information a and first candidate association information, and third indication information b and second candidate association information according to an embodiment of this application;
FIG. 14A is a diagram 2 of first candidate association information and second candidate association information according to an embodiment of this application;
FIG. 14B is a diagram 2 of third indication information a and first candidate association information, and third indication information b and second candidate association information according to an embodiment of this application;
FIG. 15A is a diagram 2 of first candidate association information and second candidate association information according to an embodiment of this application;
FIG. 15B is a diagram 2 of third indication information a and first candidate association information, and third indication information b and second candidate association information according to an embodiment of this application;
FIG. 16 is an overview flowchart of yet another communication method according to an embodiment of this application;
FIG. 17 is a diagram of a structure of a communication apparatus according to an embodiment of this application; and
FIG. 18 is a diagram of a structure of another communication apparatus according to an embodiment of this application.

### DESCRIPTION OF EMBODIMENTS

Embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5G system, or new radio (new radio, NR), or is applied to a future communication system or another similar communication system.

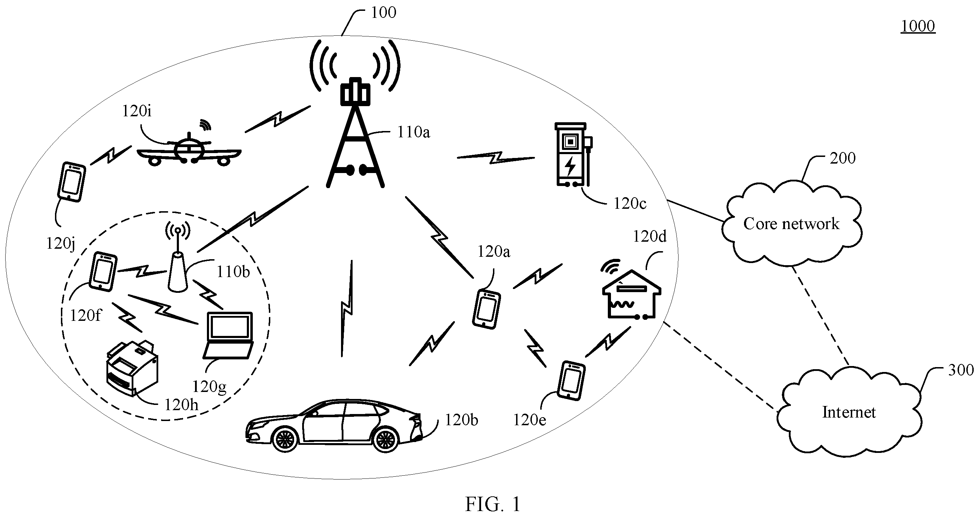

FIG. 1 is a diagram of an architecture of a communication system 1000 to which embodiments of this application are applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. Terminals may be connected to each other in a wired or wireless manner, and radio access network devices may be connected to each other in a wired or wireless manner. FIG. 1 is merely a diagram. The communication system may further include another network device, for example, may further include a wireless relay device and a wireless backhaul device, which are not drawn in FIG. 1.

The radio access network device may be a network device for short, and may be a base station (base station), an evolved NodeB (evolved NodeB, eNodeB), a transmission reception point (transmission reception point, TRP), a next generation base station (next generation NodeB, gNB) in a 5G mobile communication system, a next generation base station in a 6th generation (6th generation, 6G) mobile communication system, a base station in a future mobile communication system, an access node in a Wi-Fi system, or the like; or may be a module or a unit that completes some functions of a base station, for example, may be a central unit (central unit, CU) or a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all of functions of a physical layer. For specific descriptions of the foregoing protocol layers, refer to related technical specifications in the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node, a donor node, or the like. A specific technology and a specific device form that are used by the radio access network device are not limited in embodiments of this application. For ease of description, the following uses an example in which the radio access network device is a base station for description.

The terminal device may also be referred to as a terminal, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, automatic driving, telemedicine, a smart grid, smart furniture, a smart office, smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form used by the terminal device are not limited in embodiments of this application. For ease of description, the following uses an example in which the terminal is used as a terminal device for description.

The base station and the terminal may be at fixed locations, or may be mobile. The base station and the terminal may be deployed on land, including an indoor or outdoor device, a handheld device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station. For the terminal 120j accessing the radio access network 100 through 120i, the uncrewed aerial vehicle 120i is a base station. However, for the base station 110a, 120i is a terminal. In other words, communication between 110a and 120i is performed by using a radio air interface protocol. Certainly, communication between 110a and 120i may alternatively be performed by using an interface protocol between base stations. In this case, for 110a, 120i is also a base station. Therefore, both the base station and the terminal may be collectively referred to as communication apparatuses, 110a and 110b in FIG. 1 may be referred to as communication apparatuses having a function of the base station, and 120a to 120j in FIG. 1 may be referred to as communication apparatuses having a function of the terminal.

Communication between a base station and a terminal, between base stations, or between terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal may alternatively be performed by a module (for example, a chip or a modem) in the terminal, or may be performed by an apparatus having the function of the terminal.

In embodiments of this application, the base station sends a downlink signal or downlink information to the terminal. The downlink information is carried on a downlink channel. The terminal sends an uplink signal or uplink information to the base station. The uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

The following describes some terms in embodiments of this application, to facilitate understanding of a person skilled in the art.

### 1. Air interface always-on information

The air interface always-on information may also be referred to as an air interface always-on signal, a common signal, or common information, and is information that needs to be sent continuously even if no uplink or downlink service needs to be transmitted, for example, information used to maintain synchronization and basic measurement. This type of signal usually includes a synchronization signal, a master information block (master information block (master information block, MIB)), a system information block 1 (system information block 1, SIB 1), or the like.

### 2. Light load and heavy load

Usually, service load is an average service volume that arrives in a period of time. If the average service volume that arrives in a period of time is small, for example, the average service volume is smaller than a threshold, a system is in light load. On the contrary, the system is in heavy load. If load is between light load and heavy load, the load may also be referred to as medium load.

### 3. Initial camping and random access procedure

First, the terminal detects a synchronization signal. For example, the synchronization signal may include a primary synchronization signal (primary synchronization signal, PSS) and/or a secondary synchronization signal (secondary synchronization signal, SSS), to obtain cell synchronization and cell identity identification. Then, the terminal receives a physical broadcast channel (physical broadcast channel, PBCH) based on the detected synchronization signal. For example, there is a resource mapping relationship between the PSS/SSS and the PBCH. Usually, the PSS/SSS and the PBCH are jointly referred to as a synchronization signal/broadcast channel block (synchronization signal/PBCH block, SSB), which is a synchronization signal block for short. The PBCH includes a MIB, and the MIB includes a system radio frame number, a control resource set zero (control resource set zero, CORESET) #0 and a search space (search space, SS) #0 of a common PDCCH. The CORESET #0 and the SS #0 respectively indicate a frequency domain location and a time domain location of common downlink control information (downlink control information, DCI) for receiving and scheduling the SIB 1.

The terminal may detect, based on the SSB, the common PDCCH or the common DCI for scheduling the SIB 1, and then obtain the SIB 1, to complete camping in an idle state. For example, cyclic redundancy check (cyclic redundancy check, CRC) of the common PDCCH is usually scrambled by a system information radio network temporary identity (system information-RNTI, SI-RNTI), indicating that the common PDCCH is DCI carrying system information, and a monitoring periodicity of the SIB 1 is 20 ms or is indicated by the SSB. The SIB 1 is necessary system information other than the MIB, and is also referred to as remaining necessary system information. The SIB 1 mainly includes a paging configuration, a random access configuration, a quantity of actual SSB transmit beams, a periodicity, and the like. In addition, the SIB 1 further carries scheduling information indicating the SIB-x. The SIB-x is unnecessary system information or on-demand system information, and usually includes a configuration related to mobility management, and the like.

After camping in the idle state, the terminal needs to periodically detect paging or initiate random access when there is an uplink service requirement. The paging mainly includes two functions: monitor whether a service of the terminal is triggered by a network side; and monitor whether a system information (system information, SI) modification occurs, that is, monitor an SI modification indication. A main function of random access is as follows: Provided that the terminal needs to initiate an uplink service, the terminal may initiate a random access (random access, RACH) procedure to complete state transition, that is, switch from an idle state to a radio resource control (radio resource control, RRC) connected state, to perform transmission of the uplink service.

### 2. Paging procedure

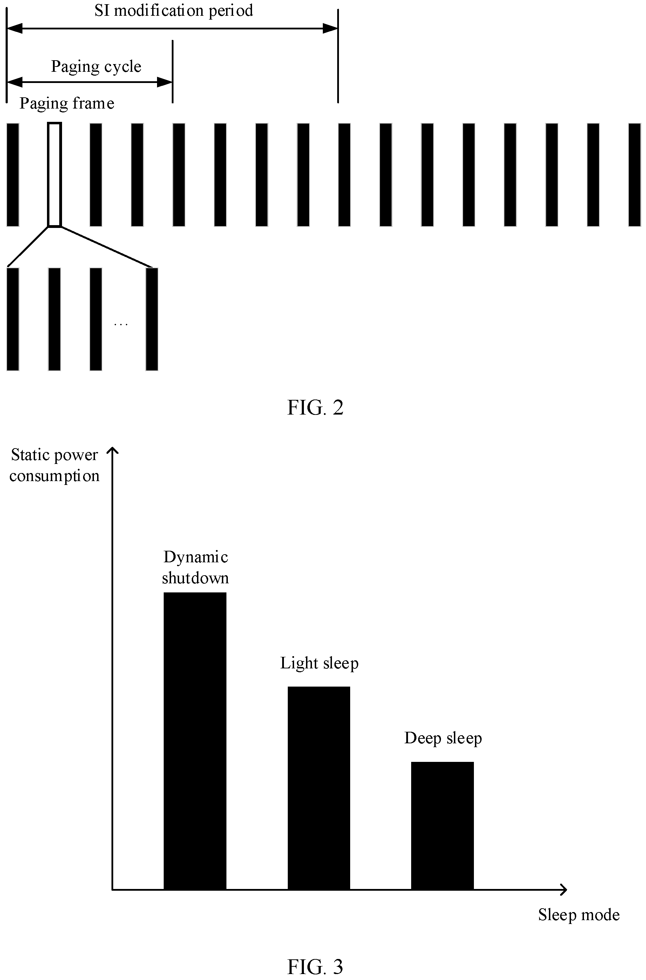

A SIB 1 carries paging configuration information, mainly including configurations of a paging cycle, a paging frame (paging frame, PF), and a paging occasion (paging occasion, PO). Paging DCI (paging DCI) is used to schedule a paging message. For example, the paging DCI may be used to schedule a PDSCH, and the PDCSH is used to carry the paging message. In addition, the paging DCI includes an SI modification indication, that is, the paging DCI also has a function of indicating an SI modification. Therefore, an SI modification period further needs to be configured. Specifically, the SI modification period may be an integer multiple of the paging cycle, the paging cycle is an integer multiple of the paging frame, and there are a plurality of POs in the PF, as shown in FIG. 2. For example, the paging cycle may be an idle-discontinuous reception (idle-discontinuous reception, I-DRX) cycle.

### 3. Paging early indication (paging early indication, PEI) procedure

One PO may correspond to a plurality of terminals. Because paging DCI does not include identities for distinguishing different terminals, provided that there is a terminal paged, all terminals in the PO detect the paging message scheduled by the paging DCI. Consequently, this causes unnecessary energy consumption. In consideration of energy saving of the terminal, a PEI mechanism is introduced. Usually, the terminal needs to detect paging DCI in a corresponding PO in each paging cycle. The PEI is introduced and the PEI is associated with the PO. The terminal may first detect PEI DCI. The PEI DCI does not schedule a PDSCH, the PEI DCI includes a PEI, and the PEI may indicate whether there is a corresponding paging message for a corresponding PO in a next paging cycle. If the PEI DCI indicates that there is no corresponding paging message for the corresponding PO in the next paging cycle, the terminal does not need to detect the paging DCI in the next paging cycle. On the contrary, the terminal detects the paging DCI in the next paging cycle, where a parameter configuration of the PEI may be carried in a SIB 1.

The paging cycle usually means that the terminal in the idle state needs to detect, at a PO location of the terminal in each cycle, whether the network side pages the terminal or monitors an SI modification indication. A paging early indication period usually means that the terminal in the idle state needs to detect whether PEI DCI needs to be detected at a paging early indication occasion (PEI occasion, PEI-O) location of the terminal in each cycle. An SI modification period is usually one or more paging cycles, and is a period for an SI modification to take effect.

### 4. RACH

A SIB 1 further carries RACH configuration information, and the RACH configuration information may indicate configuration information such as a RACH time-frequency resource and a preamble resource. For example, one slot (slot) is used as a RACH period, there may be one or more RACH occasions (RACH occasions, ROs) in each slot, and one RO may be understood as one RACH time-frequency resource. Both a start symbol and a length of the RO in time domain are configured by a higher layer. In a transmission time interval (transmission time interval, TTI), there are a maximum of eight available RO transmission resources in frequency domain, and a resource element (resource block, RB) occupied by each RO is also configured by the higher layer.

The terminal needs to determine, based on a measurement result of an SSB index (index), which RO is selected and which RACH preamble (preamble) is sent. SSB-RACH association (Association) defines a correspondence between an SSB index and {RO, RACH preamble index}.

There are two cases of the SSB-RACH association:
Case 1: One SSB index is associated with at least one RO.
Case 2: A plurality of SSB indexes are associated with one RO, but the plurality of SSB indexes are associated with different RACH preamble index sets in the RO.

For example, eight SSBs sent by the base station are respectively corresponding to eight transmit beams, and correspondingly may respectively correspond to eight RACH occasions and/or eight groups of RACH preambles in a one-to-one correspondence, or one SSB may correspond to a plurality of RACH occasions and/or a plurality of groups of RACH preambles. When detecting that a signal of a specific SSB is strong, the terminal sends a RACH by using a RACH occasion and/or a RACH preamble corresponding to the SSB, so that the base station can receive the RACH through a corresponding beam and send a RACH acknowledgement message.

In addition, it should be further noted that SSB-to-RO mapping corresponds to an association period (association period), which may also be referred to as an association period. The association period is defined as a minimum quantity of RACH periods in which all SSBs are completely mapped at least once.

An association pattern period is based on the foregoing association period. The SSB and the RACH are repeatedly associated over rounds. However, it needs to be ensured that the foregoing association pattern is repeated in a specific period. For example, the foregoing association pattern is repeated once every 160 ms.

### 5. Power consumption of an active antenna unit (active antenna unit, AAU)

A typical 5G base station includes a baseband unit (baseband unit, BBU) and an AAU, with the AAU being a dominant contributor to power consumption. The following uses the AAU as an example to analyze power consumption of the base station. Power consumption of the AAU is classified into dynamic power consumption and static power consumption.

The dynamic power consumption includes a part of power consumption of a power amplifier and a channel. The dynamic power consumption is determined by a multi-dimensional dynamic shutdown ratio. Dynamic shutdown includes time domain shutdown (that is, no signal is received or sent on a specific symbol or in a specific slot), frequency domain shutdown (that is, no signal is received or sent on a specific frequency domain resource, for example, no signal is received or sent on a carrier), space domain shutdown (that is, no signal is received or sent on some channels), and power domain shutdown (which is also referred to as power backoff, namely, transmit power reduction).

The static power consumption includes a part of power consumption of baseband processing and a channel. The static power consumption is determined by a sleep depth of the base station. A deeper sleep depth of the base station indicates lower static power consumption. However, a deeper sleep depth of the base station indicates longer wake-up time of the base station.

For example, a sleep mode includes dynamic shutdown, light sleep, and deep sleep. FIG. 3 shows a relationship between the sleep mode and static power consumption. For a dynamic shutdown mode, the static power consumption is high, but symbol-level wake-up can be implemented at any time. For a deep sleep mode, the static power consumption is low, but wake-up time is long, for example, at a second-level or minute-level, which greatly affects service continuity. In addition, the light sleep is a sleep mode between the dynamic shutdown and the deep sleep.

Currently, prolonging a reception/transmission cycle of an air interface always-on signal can reduce power consumption of the base station. Specifically, based on a system load condition, when the system is in light load, the reception/transmission cycle of the air interface always-on signal is prolonged. In this case, the base station enters the sleep state. However, the sleep depth and the wake-up time of the base station need to match the reception/transmission cycle of the air interface always-on signal. On the contrary, when the system is in medium load or heavy load, the reception/transmission cycle of the air interface always-on signal is reduced to meet service continuity and performance experience. In this case, the base station cannot enter the sleep mode and the static power consumption cannot be reduced.

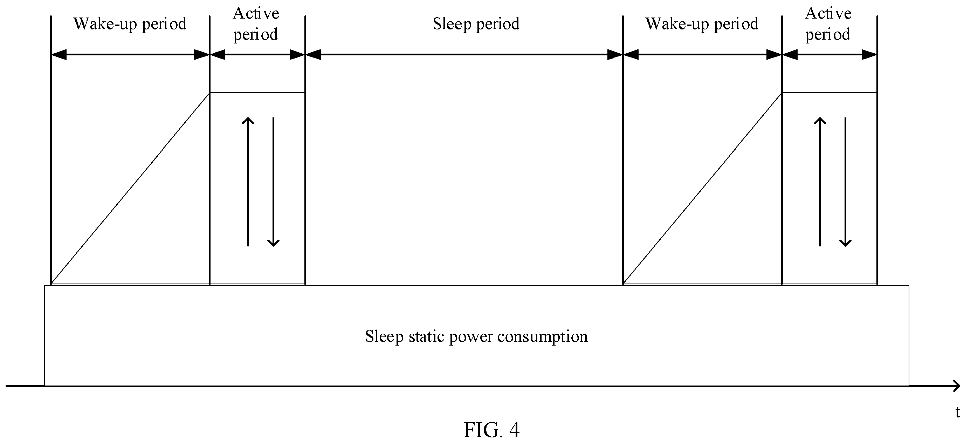

As shown in FIG. 4, a longer sleep period indicates lower static power consumption and a longer wake-up period. The active period is used to receive and send the air interface always-on signal. It should be understood that shortening duration of the active period and prolonging the sleep period both can reduce power consumption of the base station.

Currently, a periodicity of the air interface always-on signal is adjusted through an SI modification procedure. If the base station needs to adjust, based on a load change, a configuration of a short-period always-on signal in heavy load to a configuration of a long-period always-on signal in light load, that is, prolong the reception/transmission cycle of the air interface always-on signal, the base station needs to perform the following steps:
(1) Paging DCI is sent to indicate an SI modification indication for all POs in a previous SI modification period before an SI modification boundary.
(2) The terminal receives the SI modification indication at a PO location of the terminal in the previous SI modification period.
(3) The base station starts to perform an SI modification operation in a next SI modification period after the SI modification boundary.
(4) In the next SI modification period after the SI modification boundary, the terminal needs to start to re-receive SI, namely, modified SI, and the terminal uses the modified SI to receive and send the air interface always-on signal.

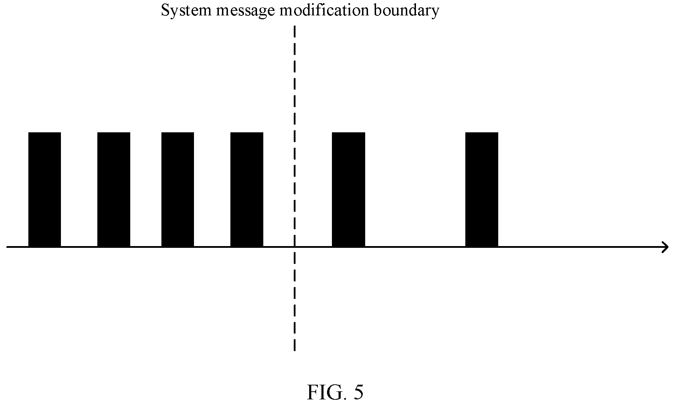

For example, a terminal in an idle state needs to detect paging DCI at a PO location of the terminal. Provided that the paging DCI includes the SI modification indication, the base station starts to modify the SI in the next SI modification period. Correspondingly, the terminal needs to receive the modified SI as soon as possible in the next SI modification period. Therefore, before the terminal successfully obtains the modified SI from the boundary of the SI modification period, the terminal cannot learn of the modified SI in this period of time. Therefore, errors may occur in some operations of the terminal in this period of time. For example, provided that the RACH period is modified, the terminal may initiate a RACH in an incorrect RACH occasion, but the base station may be incapable of receiving the RACH. As shown in FIG. 5, a periodicity of a message A before a system message modification boundary is less than a period of the message A after the system message modification boundary.

In conclusion, it may be learned from the foregoing SI modification procedure that a procedure of adjusting the periodicity of the air interface always-on signal through the SI modification procedure is very complex and a delay is very long, and cannot be applied to a case in which some always-on signals (for example, SIBs) are initially received. For example, before the paging DCI is received, a series of signals (including an SSB, a MIB, a SIB 1, or the like) need to be received, to obtain a PO location. However, currently, time domain configurations of these signals cannot be flexibly indicated.

It may be learned from the foregoing content that, with continuous evolution of hardware and software, static power consumption and sleep and wake-up time of the base station may continuously decrease, and a power consumption proportion of the air interface always-on signal is increasingly large, and even becomes a power consumption bottleneck of the system in light load. Embodiments of this application provide several possible communication methods, to quickly and flexibly adjust a time domain configuration of an air interface always-on signal, so that a periodicity of the air interface always-on signal can be quickly prolonged in light load, and a base station enters light sleep or deep sleep in light load, thereby reducing static power consumption.

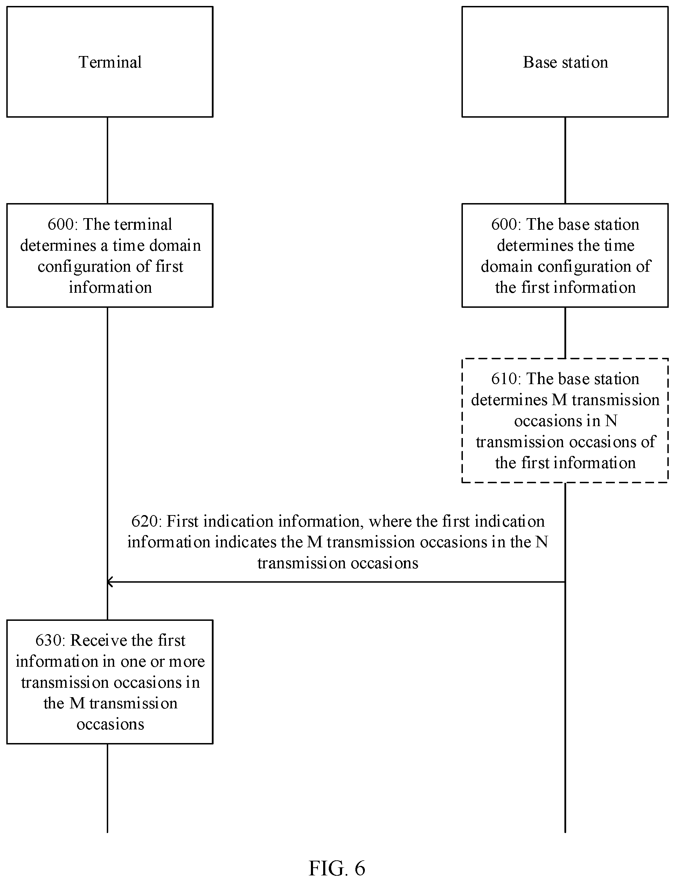

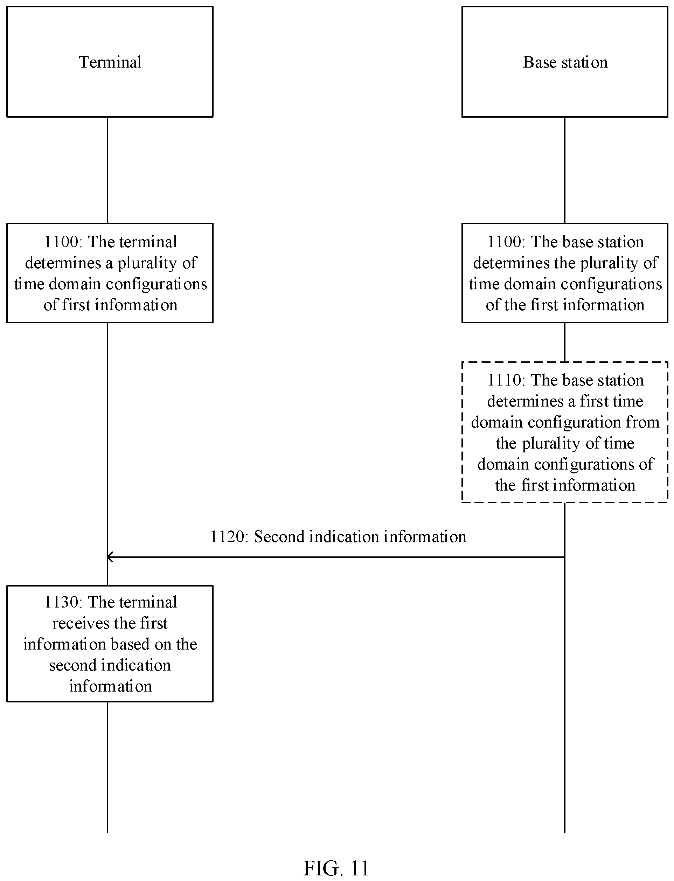

Embodiments shown in FIG. 6 and FIG. 11 are applicable to a scenario in which a terminal receives downlink information, that is, a base station sends the downlink information. In the following embodiments shown in FIG. 6 and FIG. 11, first information includes at least one of system information, paging information, and paging early indication information. For example, the system information may include an SSB, a MIB, a SIB 1, or the like. The paging information includes paging DCI, a paging message, or the like. The paging early indication information includes paging early indication DCI or the like.

As shown in FIG. 6, this application provides a communication method, to quickly and flexibly adjust a time domain configuration of an air interface always-on signal. The method includes the following steps.

600: A terminal determines a time domain configuration of first information, and correspondingly a base station determines the time domain configuration of the first information.

For example, the time domain configuration of the first information may be predefined in a standard, and the terminal and the base station determine the time domain configuration of the first information according to the standard. Alternatively, the time domain configuration of the first information may be configured by the base station for the terminal by using signaling.

Specifically, the first information is air interface always-on information or an air interface always-on signal. For example, the first information may be one or more of system information, paging information, and paging early indication information.

In a possible design, the system information, the paging information, and the paging early indication information may have a same time domain configuration. Alternatively, the system information, the paging information, and the paging early indication information have different time domain configurations.

For example, the time domain configuration of the first information indicates N transmission occasions of the first information, and N is a positive integer. It may be understood that the N transmission occasions of the first information is N candidate occasions in which the terminal receives the first information, or N candidate occasions in which the base station sends the first information to the terminal device. For example, the N transmission occasions may be all candidate transmission occasions of the first information within first preset duration.

For example, the N transmission occasions may be periodic occasions.

In a possible implementation, the time domain configuration of the first information indicates the N transmission occasions by using at least one of a first periodicity of the first information, first duration of the first information, and an offset of the first information. The offset of the first information may be an offset relative to a specific time unit. The time unit in this application may be a slot or a subframe, or may be a granularity unit on a specific time domain resource after evolution of a future communication system.

For example, the first information is an SSB, and a time domain configuration of the SSB includes at least one of the following: a periodicity of the SSB being 20 ms, duration of the SSB being 5 ms, and an offset of the SSB being an offset relative to a specific slot. The base station and the terminal may determine a series of periodic transmission occasions based on the time domain configuration of the SSB, that is, there is one transmission occasion whose duration is 5 ms in the SSB at an interval of 20 ms.

Optionally, 610: The base station determines M transmission occasions in the N transmission occasions of the first information, where M is a positive integer, and M≤N.

For example, when the base station needs to enter an energy saving mode, or the base station determines that current load is low, the base station may adjust the quantity M of transmission occasions of the first information to be small, to reduce transmission power consumption of the first information. For another example, when the base station determines that the current load increases, the base station may adjust the quantity M of transmission occasions of the first information to be large, to increase a quantity of transmissions of the first information.

620: The base station sends first indication information to the terminal, and correspondingly the terminal receives the first indication information from the base station, where the first indication information indicates the M transmission occasions in the N transmission occasions.

That the first indication information indicates the M transmission occasions in the N transmission occasions may be understood as that (N-M) transmission occasions in the N transmission occasions are deactivated or disabled, or may be understood as that the M transmission occasions in the N transmission occasions are activated, or the M transmission occasions in the N transmission occasions are enabled.

In a possible implementation, the first indication information may be carried on a broadcast channel. For example, the first indication information is included in a MIB, and the MIB is carried on the broadcast channel. Alternatively, the first indication information is carried by using DCI. For example, the DCI herein may be common DCI, or DCI of a newly-added type according to an existing communication standard. For example, if the first information is the paging information, the first indication information may be carried by using paging DCI; or if the first information is the paging early indication information, the first indication information may be carried by using paging early indication DCI.

In a possible implementation, the first indication information may alternatively be included in an SI modification indication. For example, the first indication information may be an independent field in the SI modification indication.

The first indication information may indicate the M transmission occasions in the N transmission occasions in the following several manners:
Manner 1: The first indication information indicates a configuration of a first time window, and the M transmission occasions are transmission occasions that are in the N transmission occasions and that are located in a time window indicated by the configuration of the first time window.

The first time window may be understood as a periodic time domain resource. The configuration of the first time window includes at least one of a periodicity of the first time window, duration of the first time window, and an offset of the first time window.

For example, the periodicity of the first time window may also be referred to as a discontinuous reception/transmission cycle. For example, the periodicity of the first time window may be a discontinuous transmission cycle of the base station or a discontinuous reception cycle of the terminal. For example, if the first information is the system information, the periodicity of the first time window may be a system information modification period; or if the first information is the paging information, the periodicity of the first time window may be a paging cycle; or if the first information is the paging early indication information, the periodicity of the first time window may be a paging early indication period. In addition, the first time window may also be a discontinuous reception cycle, of a specific terminal, that is independent of the system information modification period, the paging cycle, and the paging early indication period, and may be jointly applied to the system information, the paging information, and the paging early indication information.

The offset of the first time window may be an offset relative to a specific time unit. The time unit in this application may be a slot or a subframe, or may be a granularity unit on a specific time domain resource after evolution of a future communication system.

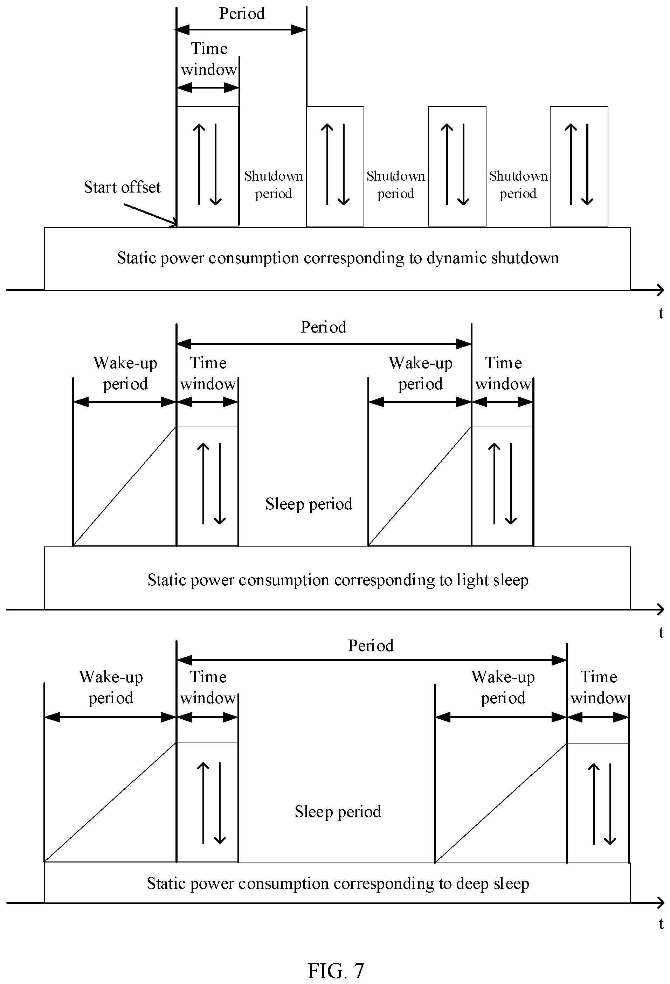

For example, the periodicity of the first time window may be 20 ms or 40 ms, and the duration of the first time window may be 5 ms or 10 ms. As shown in FIG. 7, periodicities of three time windows are different, and duration and offsets are the same. It may be learned that a longer periodicity of the time window indicates a deeper sleep depth of the base station, and lower static power consumption, but at a cost, a longer sleep wake-up periodicity.

In an example, the first indication information may include the configuration of the first time window. For example, the first indication information may include at least one of the periodicity of the first time window, the duration of the first time window, and the offset of the first time window.

In another example, the first indication information indicates the configuration of the first time window in a plurality of time window configurations. For example, the first indication information may include an index, an identifier, or the like of the configuration of the first time window.

For example, the base station may preconfigure the plurality of time window configurations for the terminal by using signaling, or a plurality of time window time domain configurations may be predefined according to a standard protocol. The plurality of time window configurations include the configuration of the first time window. Any two of the plurality of time window configurations are different from each other. The two different time window configurations may be understood as that specific parameters of two time windows are not completely the same. For example, periodicities of the two time windows are the same, and duration and offsets are different; or offsets of the two time windows are the same, but periodicities and duration are different.

In addition, in a possible implementation, the periodicity of the time window may be configured as 0, and the periodicity of the time window being 0 may also be understood as that the base station can send the first information at any moment.

It should be noted that the base station may separately indicate time window configurations for the system information, the paging information, and the paging early indication information. Alternatively, the base station jointly indicates one time window configuration for the system information, the paging information, and the paging early indication information. Alternatively, the base station joint indicates one time window configuration for any two types of information in the system information, the paging information, and the paging early indication information, and separately indicates another time window configuration for the remaining one type of information. For a specific implementation of the time window configuration, refer to the foregoing content. Details are not described herein again.

For example, that the M transmission occasions are transmission occasions that are in the N transmission occasions and that are located in the first time window may also be described as that the M transmission occasions are transmission occasions that are in the N transmission occasions and that fall in the first time window; or may be understood as that the (N-M) transmission occasions are not in the first time window.

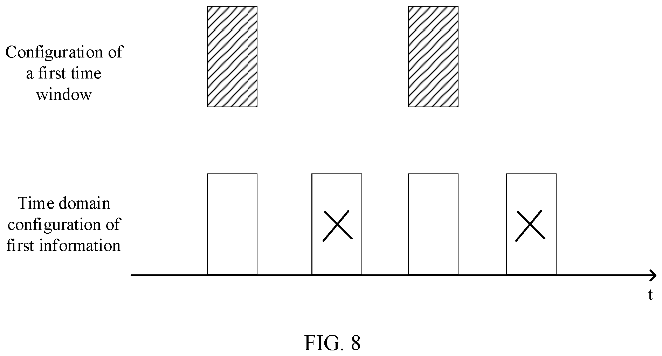

For example, as shown in FIG. 8, assuming that the time domain configuration of the first information indicates that the periodicity of the first information (or described as a periodicity of the transmission occasion of the first information) is 10 ms and the duration of the first information (or described as duration of the transmission occasion of the first information) is 5 ms, and the configuration of the first time window indicates that the periodicity of the first time window is 20 ms and the duration of the first time window is 5 ms, an offset of the transmission occasion of the first information is the same as the offset of the first time window. FIG. 8 shows a relationship between two first time windows and four transmission occasions of the first information, where N=4, M=2, two of the four transmission occasions of the first information are located in the first time window, and the other two transmission occasions marked with a cross are deactivated.

In Manner 1, a part of transmission occasions of the first information may be flexibly activated or deactivated by indicating different time window configurations. In light load, the time window configuration may be quickly adjusted, so that the transmission occasion of the first information is deactivated, and the base station can enter a sleep mode, thereby reducing static power consumption of the base station and a power consumption proportion of the first information.

Manner 2: The first indication information indicates a first transmission occasion pattern, and the first transmission occasion pattern indicates the M transmission occasions in the N transmission occasions.

For example, the first indication information includes an index or an identifier of a first receiving time pattern, or the first indication information may indicate the M transmission occasions in the N transmission occasions by using a bitmap. The base station may preconfigure a plurality of transmission occasion patterns for the terminal by using signaling, or the plurality of transmission occasion patterns may be predefined according to a standard protocol. The plurality of transmission occasion patterns include the first transmission occasion pattern. Any two of the plurality of transmission occasion patterns are different from each other.

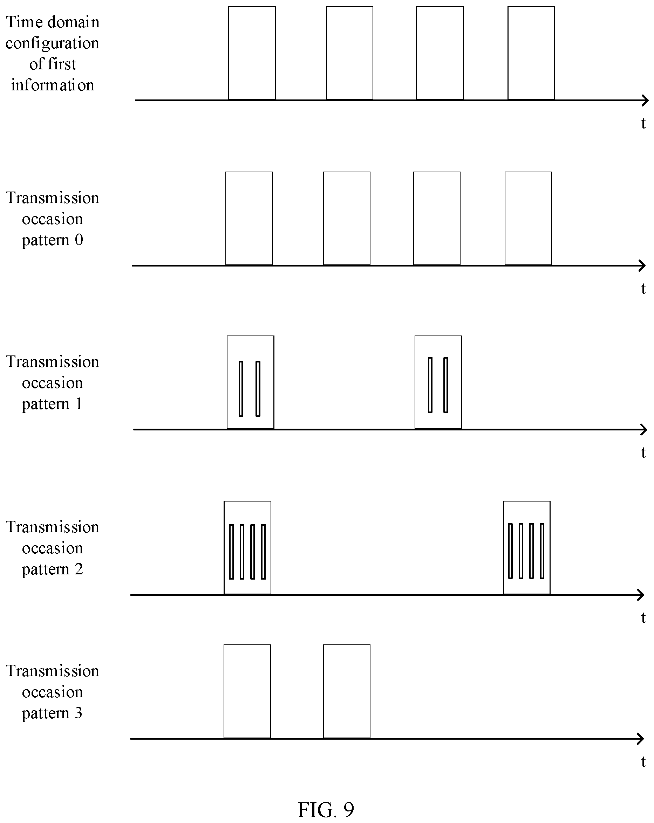

For example, as shown in FIG. 9, a transmission occasion pattern 0 to a transmission occasion pattern 3 are different from each other. A transmission occasion indicated by the transmission occasion pattern 0 is the same as the transmission occasion indicated by the time domain configuration of the first information. Transmission occasions respectively indicated by the transmission occasion pattern 1 to the transmission occasion pattern 3 are a part of the transmission occasion indicated by the time domain configuration of the first information.

It should be noted that the base station may separately indicate transmission occasion patterns for the system information, the paging information, and the paging early indication information. Alternatively, the base station jointly indicates one transmission occasion pattern for the system information, the paging information, and the paging early indication information. Alternatively, the base station joint indicates one transmission occasion pattern for any two types of information in the system information, the paging information, and the paging early indication information, and separately indicates another transmission occasion pattern for the remaining one type of information.

In addition, the first indication information may further indicate a quantity of bursts in one transmission occasion. The quantity of bursts in one transmission occasion may be understood as a quantity of times that the base station sends the first information in one transmission occasion, or a quantity of times that the terminal receives or detects the first information in one transmission occasion. It may be understood that if the first indication information does not indicate the quantity of bursts in one transmission occasion, the quantity of bursts in one transmission occasion is a default value. For example, the default value may be predefined according to a standard protocol or preconfigured by using signaling.

The quantity of bursts in one transmission occasion may have a binding relationship with the receiving time pattern, or the quantity of bursts in one transmission occasion may be independently indicated.

For example, if the periodicity of the first information is long, a larger quantity of bursts may be configured for each transmission occasion, that is, a sending interval of the first information in each transmission occasion is shorter. As shown in FIG. 9, if a periodicity of the first information in a transmission occasion pattern 2 is greater than a periodicity of the first information in the transmission occasion pattern 1, a quantity of bursts configured for each transmission occasion in the transmission occasion pattern 2 is 4, and a quantity of bursts configured for each transmission occasion in the transmission occasion pattern 2 is 2.

In Manner 2, the terminal may directly determine the M transmission occasions in the N transmission occasions of the first information based on the first indication information. The first indication information indicates different transmission occasion patterns, so that the transmission occasion of the first information can be flexibly configured. In light load, the transmission occasion pattern may be quickly adjusted, to reduce the transmission occasion of the first information, so that the base station can enter a sleep mode, thereby reducing static power consumption of the base station and a power consumption proportion of the first information.

Manner 3: The time domain configuration of the first information indicates the N transmission occasions by using at least one of the first periodicity of the first information, the first duration of the first information, and the offset of the first information, the first indication information indicates a second periodicity of the first information, and the M transmission occasions are transmission occasions determined in the N transmission occasions based on the second periodicity of the first information. For example, the second periodicity of the first information may be greater than or equal to the first periodicity of the first information. A difference between the second periodicity and the first periodicity may be determined based on factors such as an actual communication requirement and/or an energy saving requirement. This is not limited in this application.

The first periodicity of the first information may also be described as a first periodicity of the transmission occasion of the first information. The first duration of the first information may also be described as first duration of the transmission occasion of the first information. The offset of the first information may also be described as a first offset of the transmission occasion of the first information. The second periodicity of the first information may also be described as a second periodicity of the transmission occasion of the first information. In addition to indicating the second periodicity of the first information, the first indication information may further indicate second duration of the first information. The second duration may be less than or equal to the first duration.

For example, the duration of the first information and the offset of the first information may not be changed, but only the periodicity of the first information is changed; or the offset of the first information may not be changed, but only the periodicity of the first information and the duration of the first information are changed.

It may be understood that when the second periodicity is greater than the first periodicity, usually, in same time, that a quantity of transmission occasions determined based on the second periodicity is less than a quantity of transmission occasions determined based on the first periodicity is alternatively described as that transmission occasions determined based on the first periodicity are dense, and transmission occasions determined based on the second periodicity are sparse.

In an example, if the second periodicity of the first information is an integer multiple of the first periodicity of the first information, and the duration and the offset of the first information remain unchanged, the periodicity of the M transmission occasions is the second periodicity.

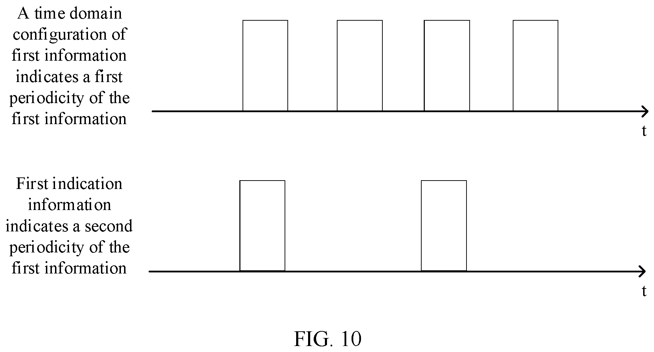

For example, as shown in FIG. 10, assuming that the first periodicity of the first information is 10 ms, the second periodicity of the first information is 20 ms, and the duration and the offset of the first information remain unchanged, the periodicity of the M transmission occasions is 20 ms.

In another example, if the second periodicity of the first information is not an integer multiple of the first periodicity of the first information, the second periodicity of the first information is greater than the first periodicity of the first information, and the duration and the offset of the first information remain unchanged, the periodicity of the M transmission occasions is a least common multiple of the first periodicity and the second periodicity.

For example, assuming that the first periodicity of the first information is 20 ms, the second periodicity of the first information is 30 ms, and the duration and the offset of the first information remain unchanged, the periodicity of the M transmission occasions is 60 ms.

In a possible implementation, the first indication information may directly indicate the second periodicity of the first information. For example, assuming that the first periodicity is 10 ms, the first indication information may indicate that the second periodicity is 20 ms, as shown in FIG. 10.

In another possible implementation, the first indication information may further indicate a proportional relationship between the second periodicity of the first information and the first periodicity of the first information. For example, assuming that the first periodicity is 10 ms, and the first indication information may indicate that the second periodicity is twice the first periodicity, the second periodicity is 20 ms. For another example, the base station may preconfigure a plurality of proportional relationships between the second periodicity and the first periodicity for the terminal by using signaling, or the plurality of proportional relationships between the second periodicity and the first periodicity may be predefined according to a standard protocol. For example, if the plurality of proportional relationships between the second periodicity and the first periodicity may be twice, four times, or the like, the first indication information may indicate one of the plurality of proportional relationships between the second periodicity and the first periodicity.

In Manner 3, the periodicity of the first information may be flexibly changed. In light load, the periodicity of the first information may be quickly prolonged, so that the base station can enter the sleep mode, thereby reducing static power consumption of the base station and a power consumption proportion of the first information.

630: The terminal receives the first information in one or more transmission occasions in the M transmission occasions, and correspondingly the base station sends the first information in the one or more transmission occasions in the M transmission occasions.

In a possible implementation, if a receiving moment of the first indication information is a first moment, that the terminal receives the first information in the one or more transmission occasions in the M transmission occasions may be understood as that the terminal receives the first information in the one or more transmission occasions in the M transmission occasions after a second moment, where the second moment is not earlier than the first moment; or may be described as that the terminal receives the first information in the one or more transmission occasions in the M transmission occasions starting from the second moment.

In an example, the second moment is located in an update periodicity in which the first indication information is located. For example, the first indication information may immediately take effect in the current update periodicity in which the first indication information is located. In other words, after receiving the first indication information, the terminal may immediately receive the first information based on the first indication information.

In another example, the second moment is located in a next update periodicity after the update periodicity in which the first indication information is located. That the second moment is located in the next update periodicity after the update periodicity in which the first indication information is located may be understood as that the second moment is a start moment of the next update periodicity after the update periodicity in which the first indication information is located. For example, the first indication information may start to take effect in the next update periodicity after the update periodicity in which the first indication information is located. In other words, after receiving the first indication information, the terminal may not immediately receive the first information based on the first indication information, but start to receive the first information based on the first indication information in the next update periodicity.

The first indication information may be periodically sent, and the update periodicity of the first indication information is a periodicity of the first indication information. For example, the update periodicity of the first indication information may be a paging cycle, a paging early indication period, or an SI modification period.

It should be noted that if the terminal does not receive the first indication information, the terminal receives the first information based on the time domain configuration of the first information or the first indication information previously received by the terminal.

In addition, in a possible implementation, the first indication information may indicate M1 transmission occasions in the N transmission occasions and M2 transmission occasions in the N transmission occasions, where M1≠M2, M1≤N, M2≤N, M1 and M2 are positive integers, time in which the M1 transmission occasions in the N transmission occasions take effect is the update periodicity in which the first indication information is located, and time in which the M2 transmission occasions in the N transmission occasions take effect is the next update periodicity after the update periodicity in which the first indication information is located.

Further, in the update periodicity in which the first indication information is located, the terminal device may receive the first information in one or more transmission occasions in the M1 transmission occasions. In the next update periodicity after the update periodicity in which the first indication information is located, the terminal device may receive second information in one or more transmission occasions in the M2 transmission occasions.

For example, the first indication information may include a first field and a second field, the first field indicates the M1 transmission occasions in the N transmission occasions, the second field indicates the M2 transmission occasions in the N transmission occasions, M1≠M2, M1≤N, M2≤N, and M1 and M2 are positive integers. Time in which the first field takes effect is the update periodicity in which the first indication information is located, and time in which the second field takes effect is the next update periodicity after the update periodicity in which the first indication information is located.

In a possible implementation, if the first indication information is carried on the broadcast channel, the first indication information may immediately take effect in the current update periodicity in which the first indication information is located. If the first indication information is carried by using the DCI, the first indication information may start to take effect in the next update periodicity after the update periodicity in which the first indication information is located.

For example, assuming that the first information is a SIB 1, after finding an SSB in an initial cell, the terminal receives the first indication information through the broadcast channel, and the terminal may immediately receive the SIB 1 based on the first indication information.

For another example, assuming that the first information is paging DCI, and in an initial cell camping process, after reading an SSB and a SIB 1, the terminal receives the first indication information by using the DCI, the terminal receives the paging DCI based on the first indication information in the next update periodicity after the update periodicity in which the first indication information is located. In this case, the terminal does not need to always detect a system message, but only needs to detect the system message when the terminal camps on the initial cell, and subsequently needs to detect only the DCI.

In a possible implementation, first indication information 1 is carried on the broadcast channel, and the first indication information 1 indicates m1 transmission occasions in n1 transmission occasions of the system information. In addition, first indication information 2 is carried by using the DCI, and the first indication information 2 indicates m2 transmission occasions in n2 transmission occasions of the paging information or the paging early indication information. n1, n2, m1, and m2 are positive integers. For specific implementations of the first indication information 1 and the first indication information 2, refer to the foregoing manner 1 to manner 3. Details are not described herein again.

Optionally, the terminal further needs to monitor SI modification indication information. The SI modification indication information and the first indication information may be carried in same signaling (for example, the broadcast channel or the DCI). For example, the SI modification indication information and the first indication information are carried in two independent fields in the same signaling. Alternatively, the SI modification indication information and the first indication information may be carried in two pieces of signaling. For example, the SI modification indication information is carried in the paging DCI, and the first indication information is carried on the broadcast channel or other common DCI.

Further, if the terminal detects the SI modification indication information and the first indication information, and the SI modification indication information indicates that SI is not modified, the terminal updates a part of SI based on the first indication information, for example, configuration information such as the periodicity for receiving the first information, and the terminal does not need to update transmission of SI other than the part of SI.

If the terminal detects the SI modification indication information and the first indication information, and the SI modification indication information indicates that the SI is modified, for example, the SI modification indication information and the first indication information are carried in the two independent fields in the same signaling, the terminal needs to re-read the system information (for example, the SIB) to update the transmission of the SI other than the part of SI indicated by the first indication information, and the terminal needs to receive the first information based on the first indication information. In this case, it may be understood as that for receiving the first information, the terminal uses configuration information that is in the first indication information and that indicates the updated part of SI as a reference, and ignores configuration information that is in the system information and that is for the related part of SI of the first information.

According to the embodiment shown in FIG. 6, a part of transmission occasions of the first information may be quickly and flexibly activated or deactivated, and the base station can enter the sleep mode in light load, thereby reducing static power consumption and a power consumption proportion of the first information.

As shown in FIG. 11, this application further provides a communication method, to quickly and flexibly adjust a time domain configuration of an air interface always-on signal. The method includes the following steps.

1100: A terminal determines a plurality of time domain configurations of first information, and correspondingly a base station determines the plurality of time domain configurations of the first information.

For example, the plurality of time domain configurations of the first information may be predefined in a standard, and the terminal and the base station determine the plurality of time domain configurations of the first information according to the standard. Alternatively, the plurality of time domain configurations of the first information may be configured by the base station for the terminal by using signaling.

In a possible implementation, each of the plurality of time domain configurations of the first information may include at least one of a periodicity, duration, and an offset of the first information.

Optionally, 1110: The base station determines a first time domain configuration from the plurality of time domain configurations of the first information.

For example, when the base station needs to enter an energy saving mode, or the base station determines that current load is low, the base station may activate a time domain configuration with a small quantity of transmission occasions of the first information, to reduce power consumption for sending the first information, and implement energy saving of the base station. Alternatively, when the base station determines that the current load increases, the base station may activate a time domain configuration with a large quantity of transmission occasions of the first information. It should be noted that a specific occasion and a selection rule for determining the first time domain configuration by the base station from the plurality of time domain configurations are not limited in this application.

1120: The base station sends second indication information to the terminal, and correspondingly the terminal receives the second indication information from the base station.

The second indication information indicates the first time domain configuration in the plurality of time domain configurations of the first information, and the first time domain configuration indicates a transmission occasion of the first information.

In a possible implementation, the second indication information may be carried on a broadcast channel. For example, the second indication information is included in a MIB, and the MIB is carried on the broadcast channel. Alternatively, the second indication information is carried by using DCI. For example, the DCI herein may also be referred to as common DCI, or DCI of a newly-added type according to an existing communication standard. For example, if the first information is paging information, the second indication information may be carried by using paging DCI; or if the first information is paging early indication information, the second indication information may be carried by using paging early indication DCI.

In a possible implementation, the second indication information may alternatively be included in an SI modification indication. For example, the second indication information may be an independent field in the SI modification indication.

1130: The terminal receives the first information based on the second indication information, and correspondingly the base station sends the first information in the transmission occasion, of the first information, that is indicated by the second indication information.

In a possible implementation, before receiving the second indication information, the terminal and the base station may determine a second time domain configuration of the first information. For example, the second time domain configuration includes a fourth periodicity of the first information. The terminal receives the second indication information, where the second indication information indicates the first time domain configuration, and the first time domain configuration includes a third periodicity of the first information. Therefore, the second indication information may flexibly adjust the periodicity of the first information. If the third periodicity of the first information is greater than the fourth periodicity of the first information, that is, a periodicity after the adjustment is greater than a periodicity before the adjustment, the periodicity of the first information can be quickly prolonged, so that the base station can enter a sleep mode, thereby reducing static power consumption of the base station and a power consumption proportion of the first information.

In addition, the second time domain configuration may further include fourth duration of the first information, and the first time domain configuration may further include third duration of the first information. If the third duration is less than the fourth duration, that is, duration after the adjustment is less than duration before the adjustment, the duration of the first information can be shortened, thereby further reducing the static power consumption of the base station and the power consumption proportion of the first information.

In a possible implementation, if a receiving moment of the second indication information is a third moment, that the terminal receives the first information based on the second indication information may be understood as that the terminal receives the first information based on the second indication information at a fourth moment, where the fourth moment is not earlier than the third moment; or may be described as that the terminal receives the first information based on the second indication information starting from the fourth moment, and correspondingly the base station sends the first information in the transmission occasion of the first information, that is, the transmission occasion of the first information is not earlier than the fourth moment. For related descriptions of the fourth moment, refer to the second moment in 630. Details are not described herein again.

According to the embodiment shown in FIG. 11, the base station may flexibly activate or deactivate the time domain configuration of the first information by using the second indication information. For example, in light load, the base station activates a time domain configuration with a small quantity of transmission occasions of the first information, to reduce power consumption for sending the first information, and save energy of the base station.

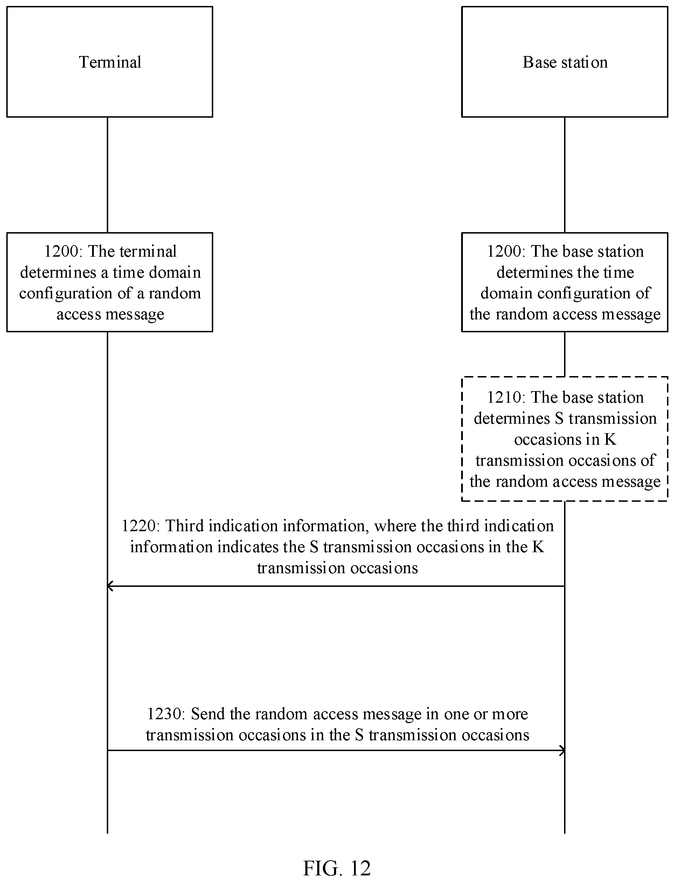

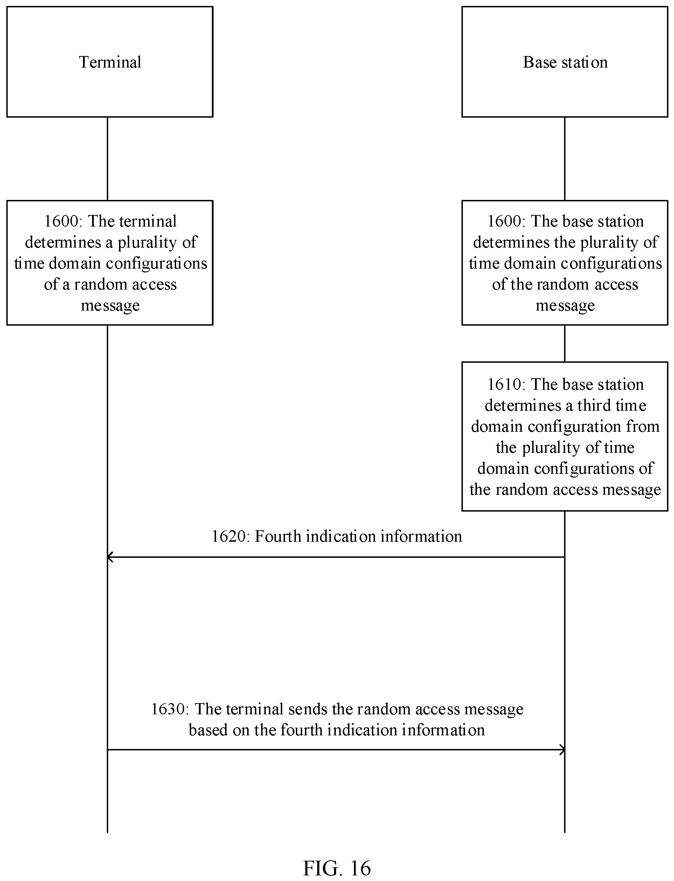

The following embodiments shown in FIG. 12 and FIG. 16 are applicable to a scenario in which a terminal sends uplink information, that is, a base station receives the uplink information. In the following embodiments shown in FIG. 12 and FIG. 16, a random access message is merely an example, or may be another uplink message, for example, a random access preamble or an uplink data packet.

As shown in FIG. 12, this application provides a communication method, to quickly and flexibly adjust a time domain configuration of an air interface always-on signal. The method includes the following steps.

1200: A terminal determines a time domain configuration of a random access message, and correspondingly a base station determines the time domain information of the random access message.

For example, the base station may preconfigure the time domain configuration of the random access message for the terminal by using signaling, or the time domain configuration of the random access message may be predefined according to a standard protocol.

For example, the time domain configuration of the random access message indicates K transmission occasions of the random access message, and K is a positive integer. It may be understood that the K transmission occasions of the random access message are K candidate occasions in which the terminal sends the random access message, or K candidate occasions in which the base station receives the random access message. For example, the K transmission occasions may be all candidate transmission occasions of the random access message within first preset duration.

For example, the K transmission occasions may be periodic occasions.

In a possible implementation, the time domain configuration of the random access message indicates the K transmission occasions by using at least one of a first periodicity of the first information, first duration of the random access message, and an offset of the random access message. The offset of the random access message may be an offset relative to a specific time unit. The time unit in this application may be a slot or a subframe, or may be a granularity unit on a specific time domain resource after evolution of a future communication system.

Optionally, 1210: The base station determines S transmission occasions in the K transmission occasions of the random access message, where S is a positive integer, and S≤K.

For example, when the base station needs to enter an energy saving mode, or the base station determines that current load is low, the base station may adjust the quantity S of transmission occasions of the random access message to be small, to reduce power consumption for detecting the random access message. For another example, when the base station determines that the current load increases, the base station may adjust the quantity S of transmission occasions of the random access message to be large, to increase a quantity of detections of the random access message.

1220: The base station sends third indication information to the terminal, and correspondingly the terminal receives the third indication information from the base station.

For example, the third indication information indicates the S transmission occasions in the K transmission occasions, S is a positive integer, and S<K.

That the third indication information indicates the S transmission occasions in the K transmission occasions may be understood as that (K-S) transmission occasions in the K transmission occasions are deactivated or disabled, or may be understood as that the S transmission occasions in the K transmission occasions are activated, or the S transmission occasions in the K transmission occasions are enabled.

In a possible implementation, the third indication information may be carried on a broadcast channel. For example, the first indication information is included in a MIB, and the MIB is carried on the broadcast channel. Alternatively, the third indication information is carried by using DCI. For example, the DCI herein may also be referred to as common DCI, or DCI of a newly-added type according to an existing communication standard, for example, paging DCI or paging early indication DCI.

In a possible implementation, the third indication information may alternatively be included in an SI modification indication. For example, the first indication information may be an independent field in the SI modification indication.

It should be noted that with reference to the embodiment shown in FIG. 6, the first indication information and the third indication information may be carried in one message, or may be carried in different messages.

The third indication information may indicate the S transmission occasions in the K transmission occasions in the following manners:

Manner 1: The third indication information indicates a configuration of a second time window, and the S transmission occasions in the K transmission occasions are transmission occasions located in a time window indicated by the configuration of the second time window.

The second time window may be understood as a periodic time domain resource. The configuration of the second time window includes at least one of a periodicity of the second time window, duration of the second time window, and an offset of the second time window. For the configuration of the second time window, specifically refer to the foregoing related descriptions of the configuration of the first time window. How the third indication information indicates the configuration of the second time window is also similar to that in which the first indication information may include the configuration of the first time window. Details are not described herein again. It should be noted that the periodicity of the second time window may be a discontinuous reception cycle of the base station or a discontinuous transmission cycle of the terminal.

For example, that the S transmission occasions in the K transmission occasions are the transmission occasions located in the time window indicated by the configuration of the second time window may also be described as that the S transmission occasions in the K transmission occasions are transmission occasions that fall in the time window indicated by the configuration of the second time window; or may be understood as that the (K-S) transmission occasions are not in the time window indicated by the configuration of the second time window.

In Manner 1, a part of transmission occasions of the random access message may be flexibly activated or deactivated by indicating different time window configurations. In light load, the time window configuration may be quickly adjusted, so that the transmission occasion of the random access message is deactivated, and the base station can enter a sleep mode, thereby reducing static power consumption of the base station and a power consumption proportion for detecting a random access message.

Manner 2: The third indication information indicates a first transmission occasion pattern, and the first transmission occasion pattern indicates the S transmission occasions in the K transmission occasions.

For example, the third indication information includes an index or an identifier of a first sending time pattern, or the third indication information may indicate the S transmission occasions in the K transmission occasions by using a bitmap. The base station may preconfigure a plurality of transmission occasion patterns for the terminal by using signaling, or the plurality of transmission occasion patterns may be predefined according to a standard protocol. The plurality of transmission occasion patterns include the first transmission occasion pattern. Any two of the plurality of transmission occasion patterns are different from each other. As shown in FIG. 9, the time domain configuration of the first information may be replaced with the time domain configuration of the random access message, and the transmission occasion pattern 0 to the transmission occasion pattern 3 may also be replaced with a transmission occasion pattern 0 to a transmission occasion pattern 3.

In addition, the third indication information may further indicate a quantity of bursts in one transmission occasion. The quantity of bursts in one transmission occasion may be understood as a quantity of times that the terminal sends the random access message in one transmission occasion, or a quantity of times that the base station receives or detects the random access message in one transmission occasion. It may be understood that if the third indication information does not indicate the quantity of bursts in one transmission occasion, the quantity of bursts in one transmission occasion is a default value. For example, the default value may be predefined according to a standard protocol or preconfigured by using signaling.

The quantity of bursts in one transmission occasion may have a binding relationship with the sending time pattern, or the quantity of bursts in one transmission occasion may be independently indicated.

In Manner 2, the terminal may directly determine the S transmission occasions in the K transmission occasions of the random access message based on the third indication information. The third indication information indicates different transmission occasion patterns, so that the transmission occasion of the random access message can be flexibly configured. In light load, the transmission occasion pattern may be quickly adjusted, to reduce the transmission occasion of the random access message, so that the base station can enter a sleep mode, thereby reducing static power consumption of the base station and a power consumption proportion of the random access message.

Manner 3: The time domain configuration of the random access message indicates the K transmission occasions by using at least one of the first periodicity of the random access message, the first duration of the random access message, and the offset of the random access message, the third indication information indicates a second periodicity of the random access message, and the S transmission occasions are transmission occasions determined in the K transmission occasions based on the second periodicity of the random access message. For example, the first periodicity of the random access message is greater than or equal to the second periodicity of the random access message. A difference between the second periodicity and the first periodicity may be determined based on factors such as an actual communication requirement and/or an energy saving requirement. This is not limited in this application.

The first periodicity of the random access message may also be described as a first periodicity of the transmission occasion of the random access message. The first duration of the random access message may also be described as first duration of the transmission occasion of the random access message. The offset of the random access message may also be described as a first offset of the transmission occasion of the random access message. The second periodicity of the random access message may also be described as a second periodicity of the transmission occasion of the random access message. In addition to indicating the second periodicity of the random access message, the third indication information may further indicate second duration of the random access message. The second duration may be less than or equal to the first duration.

For a specific manner in which the third indication information indicates the second periodicity of the random access message, refer to related content in which the first indication information indicates the second periodicity of the first information. Details are not described herein again.

In Manner 3, the periodicity of the random access message may be flexibly adjusted. In light load, the periodicity of the random access message may be quickly prolonged, so that the base station can enter a sleep mode, thereby reducing static power consumption of the base station and a power consumption proportion of the random access message.

It may be understood that Manner 1 to Manner 3 above are merely examples, and are similar to Manner 1 to Manner 3 in the embodiment shown in FIG. 6, which may be mutually referenced.

1230: The terminal sends the random access message in one or more transmission occasions in the S transmission occasions, and correspondingly the base station receives the random access message in the one or more transmission occasions in the S transmission occasions.

For example, because the transmission occasion of the random access message is changed, association information may also be changed accordingly. The association information includes at least one of a correspondence between the downlink broadcast information and the RACH occasion, an association period between the downlink broadcast information and the RACH occasion, an association pattern period between the downlink broadcast information and the RACH occasion, or a quantity of RACH occasions in one RACH period.

For example, before receiving the third indication information, the terminal device sends the random access message in one or more transmission occasions in N transmission occasions. In this case, the correspondence between the downlink broadcast information and the RACH occasion is denoted as a correspondence 1. After receiving the third indication information, the terminal device sends the random access message in the one or more transmission occasions in the S transmission occasions. In this case, the correspondence between the downlink broadcast information and the RACH occasion is denoted as a correspondence 2. The correspondence 1 and the correspondence 2 may be the same or may be different. For example, in the correspondence 1, one SBB corresponds to two RACHs; and in the correspondence 2, one SBB corresponds to one RACH. After receiving the third indication information, both the terminal device and the base station need to re-determine the correspondence between the downlink broadcast information and the RACH occasion, to ensure validity of the correspondence between the downlink broadcast information and the RACH occasion.

In a possible implementation, the terminal and the base station may determine first candidate association information from L pieces of candidate association information based on the third indication information, where L is greater than or equal to 2. Each of the L pieces of candidate association information includes at least one of the correspondence between the downlink broadcast information and the RACH occasion, the association period between the downlink broadcast information and the RACH occasion, the association pattern period between the downlink broadcast information and the RACH occasion, or the quantity of RACH occasions in one RACH period. Further, the terminal sends the random access message based on the determined first candidate association information, for example, sends the random access message based on the correspondence, between the downlink broadcast information and the RACH occasion, that is indicated by the first candidate association information.

For example, the base station may preconfigure the L pieces of candidate association information for the terminal by using signaling, or the L pieces of candidate association information may be predefined according to a standard protocol. The downlink broadcast information may include an SSB, another broadcast signal, a synchronization signal, a reference signal, or the like. The RACH occasion may alternatively be replaced with a RACH time-frequency resource, preamble information, or the like.

The following uses the downlink broadcast information being an SSB and the RACH occasion as an example for description.

In a possible implementation, the L pieces of candidate association information include the first candidate association information and second candidate association information.

Example 1: The correspondence, between the downlink broadcast information and the RACH occasion, that is indicated by the first candidate association information is the same as a correspondence, between the downlink broadcast information and the RACH occasion, that is indicated by the second candidate association information, and the association period, between the downlink broadcast information and the RACH occasion, that is indicated by the first candidate association information is different from an association period, between the downlink broadcast information and the RACH occasion, that is indicated by the second candidate association information.

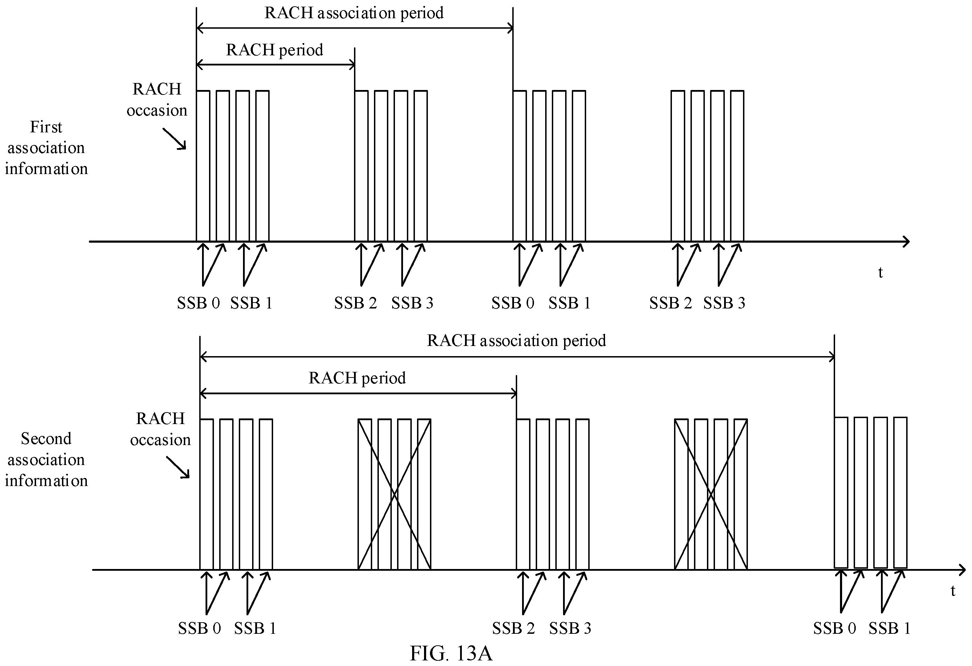

As shown in FIG. 13A, in the correspondences respectively indicated by the first candidate association information and the second candidate association information, a correspondence between the SSB and the RACH occasion is that one SBB corresponds to two RACHs. An association period, between the SSB and the RACH occasion, that is indicated by the first candidate association information is half of an association period, between the SSB and the RACH occasion, that is indicated by the second candidate association information.

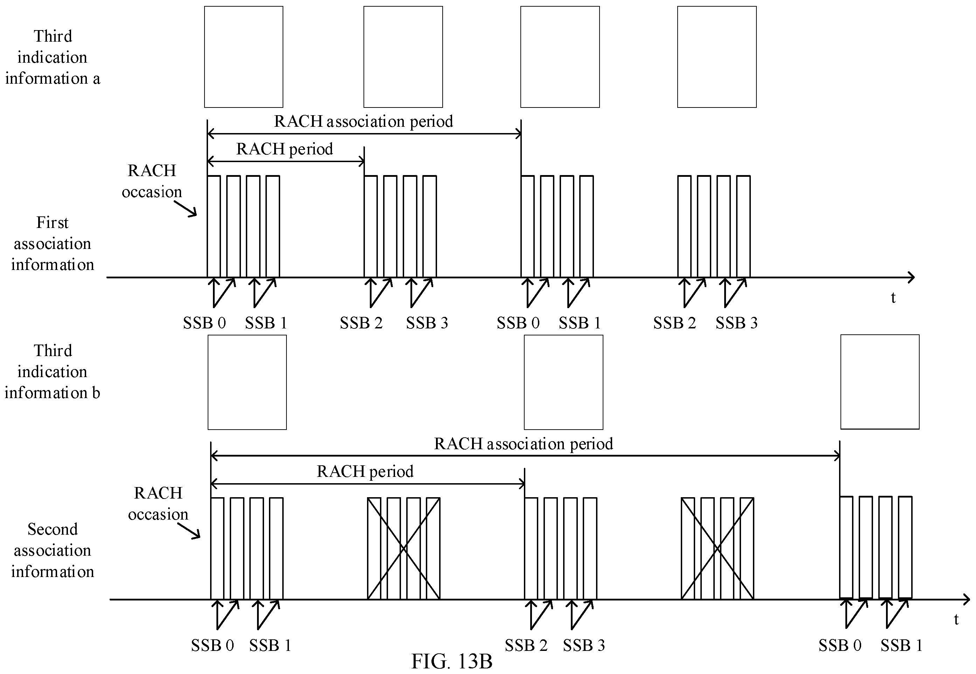

As shown in FIG. 13B, the terminal determines the first candidate association information based on third indication information a. The terminal determines the second candidate association information based on third indication information b. An association relationship between the third indication information a and the first candidate association information and an association relationship between the third indication information b and the first candidate association information may be configured in advance.

Example 2: The correspondence, between the downlink broadcast information and the RACH occasion, that is indicated by the first candidate association information is different from a correspondence, between the downlink broadcast information and the RACH occasion, that is indicated by the second candidate association information, and the association period, between the downlink broadcast information and the RACH occasion, that is indicated by the first candidate association information is the same as an association period, between the downlink broadcast information and the RACH occasion, that is indicated by the second candidate association information.

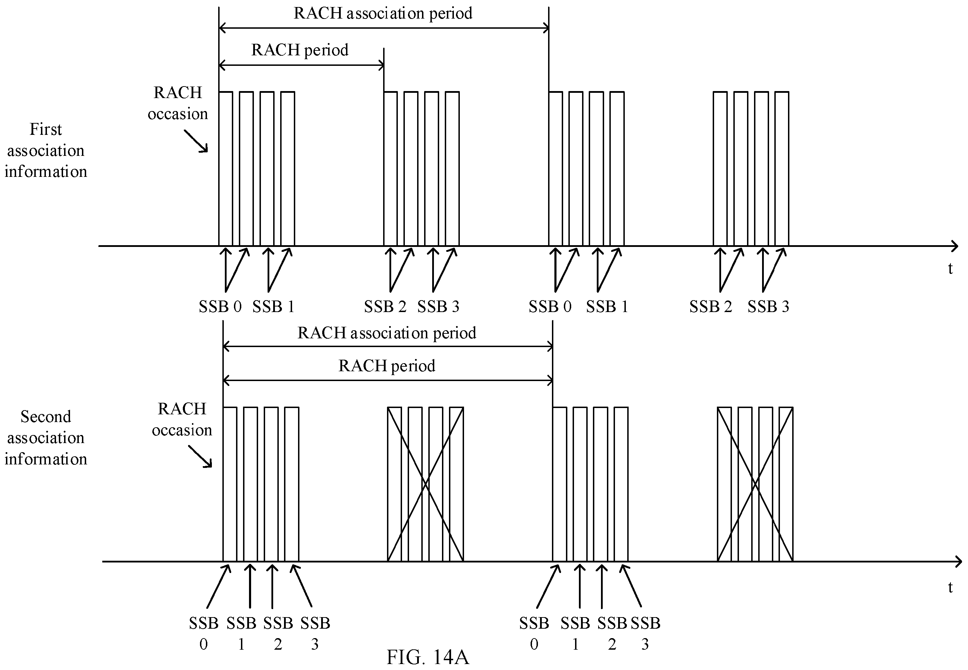

As shown in FIG. 14A, in the correspondence indicated by the first candidate association information, a correspondence between the SSB and the RACH occasion is that one SBB corresponds to two RACHs; and in the correspondence indicated by the second candidate association information, a correspondence between the SSB and the RACH occasion is that one SBB corresponds to one RACH. An association period, between the SSB and the RACH occasion, that is indicated by the first candidate association information is the same as an association period, between the SSB and the RACH occasion, that is indicated by the second candidate association information.

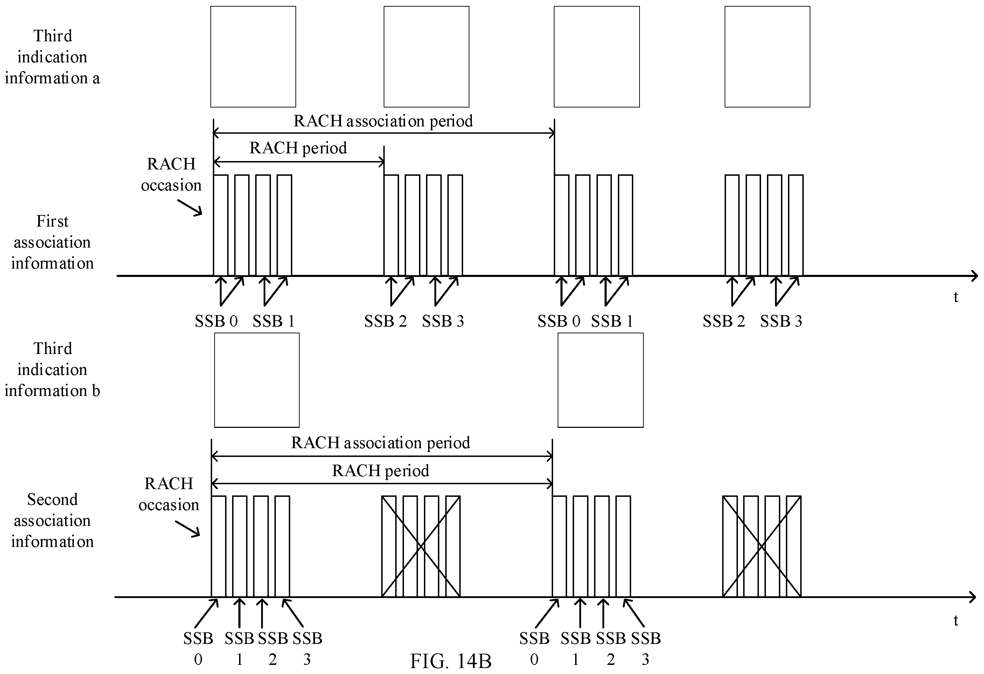

As shown in FIG. 14B, the terminal determines the first candidate association information based on third indication information a. The terminal determines the second candidate association information based on third indication information b. An association relationship between the third indication information a and the first candidate association information and an association relationship between the third indication information b and the first candidate association information may be configured in advance.

Example 3: The correspondence, between the downlink broadcast information and the RACH occasion, that is indicated by the first candidate association information is the same as a correspondence, between the downlink broadcast information and the RACH occasion, that is indicated by the second candidate association information, the association period, between the downlink broadcast information and the RACH occasion, that is indicated by the first candidate association information is the same as an association period, between the downlink broadcast information and the RACH occasion, that is indicated by the second candidate association information, and the quantity, of RACH occasions in one RACH period, that is indicated by the first candidate association information is different from a quantity, of RACH occasions in one RACH period, that is indicated by the second candidate association information.

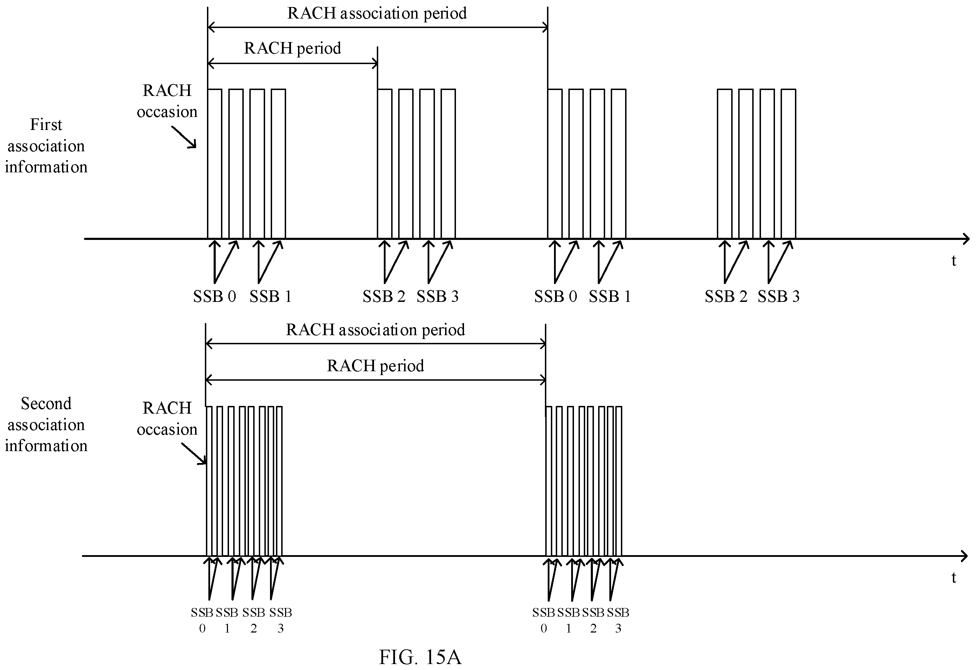

As shown in FIG. 15A, a correspondence, between the SSB and the RACH occasion, that is indicated by the first candidate association information is the same as a correspondence, between the SSB and the RACH occasion, that is indicated by the second candidate association information. Specifically, the correspondence between the SSB and the RACH occasion is that one SBB corresponds to two RACHs. In the correspondence indicated by the second candidate association information, the correspondence between the SSB and the RACH occasion is that one SBB corresponds to two RACHs. The association period, between the downlink broadcast information and the RACH occasion, that is indicated by the first candidate association information is the same as the association period, between the downlink broadcast information and the RACH occasion, that is indicated by the second candidate association information. A quantity (4), of RACH occasions in one RACH period, that is indicated by the first candidate association information is different from a quantity (8), of RACH occasions in one RACH period, that is indicated by the second candidate association information.

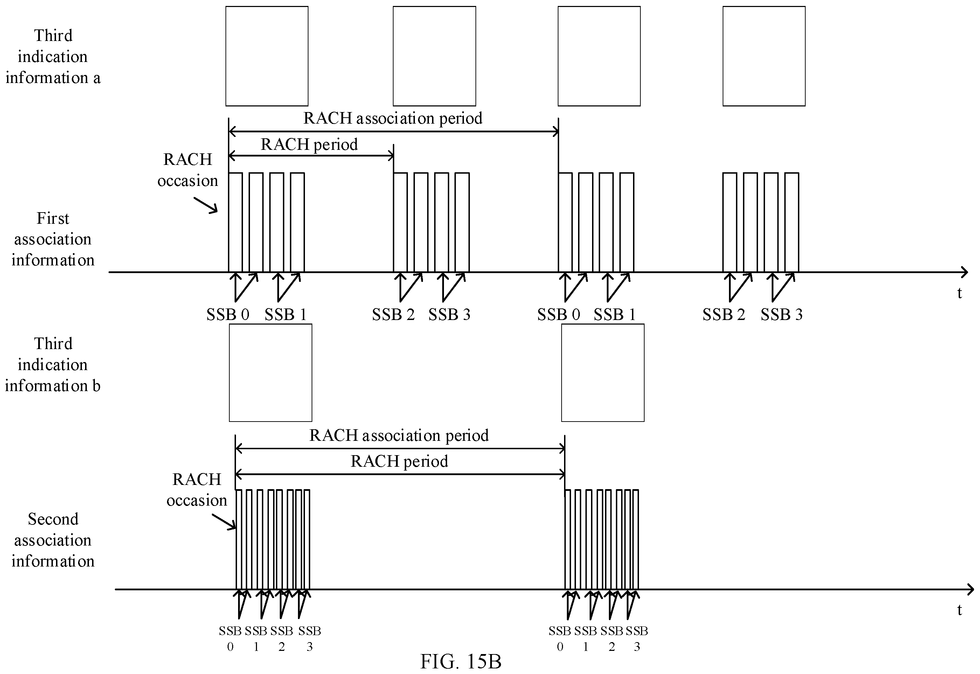

As shown in FIG. 15B, the terminal determines the first candidate association information based on third indication information a. The terminal determines the second candidate association information based on third indication information b. An association relationship between the third indication information a and the first candidate association information and an association relationship between the third indication information b and the first candidate association information may be configured in advance.

In a possible implementation, if a receiving moment of the third indication information is a fifth moment, that the terminal sends the random access message in the one or more transmission occasions in the S transmission occasions may be understood as that the terminal sends the random access message in the one or more transmission occasions in the S transmission occasions after a sixth moment, where the sixth moment is not earlier than the fifth moment; or may be described as that the terminal sends the random access message in the one or more transmission occasions in the S transmission occasions starting from the sixth moment.

In an example, the sixth moment is located in an update periodicity in which the third indication information is located. For example, the third indication information may immediately take effect in the current update periodicity in which the third indication information is located. In other words, after receiving the third indication information, the terminal may immediately send the random access message based on the third indication information.

In another example, the sixth moment is in a next update periodicity after the update periodicity in which the third indication information is located. That the sixth moment is located in the next update periodicity after the update periodicity in which the third indication information is located may be understood as that the sixth moment is a start moment of the next update periodicity after the update periodicity in which the third indication information is located. For example, the third indication information may start to take effect in the next update periodicity after the update periodicity in which the third indication information is located. In other words, after receiving the third indication information, the terminal may not immediately send the random access message based on the third indication information, but start to send the first information based on the third indication information in the next update periodicity.

The third indication information may be periodically sent, and the update periodicity of the third indication information is a periodicity of the third indication information. The update periodicity of the third indication information may be the same as or different from the update periodicity of the first indication information.

It should be noted that if the terminal does not receive the third indication information, the terminal sends the random access message based on the time domain configuration of the random access message or the third indication information previously received by the terminal.

In addition, in a possible implementation, the third indication information may indicate S1 transmission occasions in the K transmission occasions and S2 transmission occasions in the K transmission occasions, where S1≠S2, S1≤K, S2≤K, S1 and S2 are positive integers, time in which the S1 transmission occasions in the K transmission occasions take effect is the update periodicity in which the first indication information is located, and time in which the S2 transmission occasions in the K transmission occasions take effect is the next update periodicity after the update periodicity in which the first indication information is located.

Further, in the update periodicity in which the first indication information is located, the terminal device may send the random access message in one or more transmission occasions in the S1 transmission occasions. In the next update periodicity after the update periodicity in which the first indication information is located, the terminal device may send the random access message in one or more transmission occasions in the S2 transmission occasions.

The third indication information may include a first field and a second field, the first field indicates the S1 transmission occasions in the K transmission occasions, and the second field indicates the S2 transmission occasions in the K transmission occasions. Time in which the first field takes effect is the update periodicity in which the third indication information is located, and time in which the second field takes effect is the next update periodicity after the update periodicity in which the third indication information is located.

In a possible implementation, if the third indication information is carried on the broadcast channel, the third indication information may immediately take effect in the current update periodicity in which the third indication information is located. If the third indication information is carried by using the DCI, the third indication information may start to take effect in the next update periodicity after the update periodicity in which the third indication information is located.

Optionally, the terminal further needs to monitor SI modification indication information. The SI modification indication information and the second indication information may be carried in same signaling (for example, the broadcast channel or the DCI). For example, the SI modification indication information and the second indication information are carried in two independent fields in the same signaling. Alternatively, the SI modification indication information and the second indication information may be carried in two pieces of signaling. For example, the SI modification indication information is carried in the paging DCI, and the second indication information is carried on the broadcast channel or other common DCI.

Further, if the terminal detects the SI modification indication information and the second indication information, and the SI modification indication information indicates that SI is not modified, the terminal updates a part of SI based on the second indication information, for example, configuration information such as the periodicity for sending the random access message, and the terminal does not need to update transmission of SI other than the part of SI.

If the terminal detects the SI modification indication information and the second indication information, and the SI modification indication information indicates that the SI is modified, for example, the SI modification indication information and the second indication information are carried in the two independent fields in the same signaling, the terminal needs to re-read the system information (for example, the SIB) to update the transmission of the SI other than the part of SI indicated by the second indication information, and the terminal needs to send the random access message based on the second indication information. In this case, it may be understood as that for sending the random access message, the terminal uses configuration information that is in the second indication information and that indicates the updated part of SI as a reference, and ignores configuration information that is in the system information and that is for the related part of SI of the random access message.

According to the embodiment shown in FIG. 12, a part of transmission occasions of the random access message may be quickly and flexibly activated or deactivated, and the base station can enter the sleep mode in light load, thereby reducing static power consumption and a power consumption proportion for detecting the random access message.

As shown in FIG. 16, this application further provides a communication method, to quickly and flexibly adjust a time domain configuration of an air interface always-on signal. The method includes the following steps.

1600: A terminal determines a plurality of time domain configurations of a random access message, and correspondingly a base station determines the plurality of time domain configurations of the random access message.

For example, the plurality of time domain configurations of the random access message may be predefined in a standard, and the terminal and the base station determine the plurality of time domain configurations of the random access message according to the standard. Alternatively, the plurality of time domain configurations of the random access message may be configured by the base station for the terminal by using signaling.

In a possible implementation, each of the plurality of time domain configurations of the random access message may include at least one of a periodicity, duration, and an offset of the random access message.

Optionally, 1610: The base station determines a third time domain configuration from the plurality of time domain configurations of the random access message.

For example, when the base station needs to enter an energy saving mode, or the base station determines that current load is low, the base station may activate a time domain configuration with a small quantity of transmission occasions of the random access message, to reduce power consumption for the random access message, and implement energy saving of the base station. Alternatively, when the base station determines that the current load increases, the base station may activate a time domain configuration with a large quantity of transmission occasions of the random access message. It should be noted that a specific occasion and a selection rule for determining a first time domain configuration by the base station from the plurality of time domain configurations are not limited in this application.

It should be noted that a specific occasion and a selection rule for determining the third time domain configuration by the base station from the plurality of time domain configurations are not limited in this application.

1620: The base station sends fourth indication information to the terminal, and correspondingly the terminal receives the fourth indication information from the base station.

The fourth indication information indicates the third time domain configuration in the plurality of time domain configurations of the random access message, and the third time domain configuration indicates a transmission occasion of the random access message.

1630: The terminal sends the random access message based on the fourth indication information, and the base station receives the random access message in the transmission occasion, of the random access message, indicated by the fourth indication information.

In a possible implementation, the fourth indication information may be carried on a broadcast channel. For example, the first indication information is included in a MIB, and the MIB is carried on the broadcast channel. Alternatively, the fourth indication information is carried by using DCI. For example, the DCI herein may also be referred to as common DCI, or DCI of a newly-added type according to an existing communication standard, for example, paging DCI or paging early indication DCI.

In a possible implementation, the fourth indication information may alternatively be included in an SI modification indication. For example, the fourth indication information may be an independent field in the SI modification indication.

In a possible implementation, before receiving the fourth indication information, the terminal and the base station may determine a fourth time domain configuration of the random access message. For example, the fourth time domain configuration includes a fourth periodicity of the random access message. The terminal receives the fourth indication information, where the fourth indication information indicates the third time domain configuration, and the third time domain configuration includes a third periodicity of the random access message. Therefore, the fourth indication information may flexibly adjust the periodicity of the random access message. If the third periodicity of the random access message is greater than the fourth periodicity of the random access message, that is, a periodicity after the adjustment is greater than a periodicity before the adjustment, the periodicity of the random access message may be quickly prolonged, so that the base station can enter a sleep mode, thereby reducing static power consumption of the base station and a power consumption proportion for detecting the random access message.

In addition, the fourth time domain configuration may further include fourth duration of the random access message, and the third time domain configuration may further include third duration of the random access message. If the third duration is less than the fourth duration, that is, duration after the adjustment is less than duration before the adjustment, the duration of the random access message can be shortened, thereby further reducing the static power consumption of the base station and the power consumption proportion for detecting the random access message.

In a possible implementation, if a receiving moment of the fourth indication information is a seventh moment, that the terminal sends the first information based on the fourth indication information may be understood as that the terminal sends the random access message based on the fourth indication information at an eighth moment, where the eighth moment is not earlier than the seventh moment; or may be described as that the terminal sends the random access message based on the fourth indication information starting from the eighth moment. Correspondingly, the base station receives the random access message in the transmission occasion of the random access message, that is, the transmission occasion of the random access message is not earlier than the eighth moment. For related descriptions of the eighth moment, refer to the second moment in 630. Details are not described herein again.

In addition, in a possible implementation, the terminal and the base station may determine the first candidate association information from the L pieces of candidate association information based on the fourth indication information. For related descriptions of the candidate association information, refer to 1230 above. Details are not described herein again.

According to the embodiment shown in FIG. 16, the time domain configuration of the random access message may be quickly and flexibly adjusted, and the base station can enter light sleep or deep sleep in light load, thereby reducing static power consumption and a power consumption proportion of the random access message.

It may be understood that to implement functions in the foregoing embodiments, the base station and the terminal include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

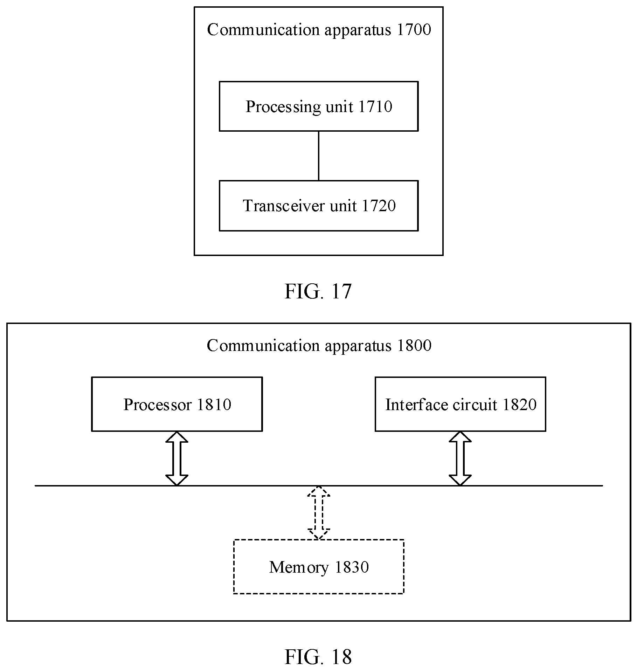

FIG. 17 and FIG. 18 are diagrams of structures of possible communication apparatuses according to embodiments of this application. These communication apparatuses may be configured to implement the function of the terminal or the base station in the foregoing method embodiments, and therefore can also achieve beneficial effects of the foregoing method embodiments. In embodiments of this application, the communication apparatus may be one of the terminals 120a to 120j shown in FIG. 1, or may be the base station 110a or 110b shown in FIG. 1, or may be a module (for example, a chip) used in the terminal or the base station.

As shown in FIG. 17, the communication apparatus 1700 includes a processing unit 1710 and a transceiver unit 1720. The communication apparatus 1700 is configured to implement functions of the terminal or the base station in the method embodiments shown in FIG. 6, FIG. 11, FIG. 12, and FIG. 16.

When the communication apparatus 1700 is configured to implement the functions of the terminal in the method embodiment shown in FIG. 6,
a processing unit 1710, configured to determine a time domain configuration of first information, where the time domain configuration of the first information indicates N transmission occasions of the first information, the first information includes at least one of system information, paging information, and paging early indication information, and N is a positive integer; and
a transceiver unit 1720, configured to: receive first indication information, where the first indication information indicates M transmission occasions in the N transmission occasions, M is a positive integer, and M≤N; and receive the first information in one or more transmission occasions in the M transmission occasions.

When the communication apparatus 1700 is configured to implement the functions of the base station in the method embodiment shown in FIG. 6,
a processing unit 1710, configured to: determine a time domain configuration of first information, where the time domain configuration of the first information indicates N transmission occasions of the first information, the first information includes at least one of system information, paging information, and paging early indication information, and N is a positive integer; and determine M transmission occasions in the N transmission occasions, where M is a positive integer, and M<N; and
a transceiver unit 1720, configured to: send first indication information, where the first indication information indicates the M transmission occasions in the N transmission occasions; and send the first information in one or more transmission occasions in the M transmission occasions.

When the communication apparatus 1700 is configured to implement the functions of the terminal in the method embodiment shown in FIG. 11,
a processing unit 1710, configured to determine a plurality of time domain configurations of first information, where the first information includes at least one of system information, paging information, and paging early indication information; and
a transceiver unit 1720, configured to: receive second indication information, where the second indication information indicates a first time domain configuration in the plurality of time domain configurations, and the first time domain configuration indicates a transmission occasion of the first information; and receive the first information based on the second indication information.

When the communication apparatus 1700 is configured to implement the functions of the base station in the method embodiment shown in FIG. 11,
a processing unit 1710, configured to determine a plurality of time domain configurations of first information, where the first information includes at least one of system information, paging information, and paging early indication information; and
a transceiver unit 1720, configured to: send second indication information, where the second indication information indicates a first time domain configuration in the plurality of time domain configurations, and the first time domain configuration indicates a transmission occasion of the first information; and send the first information in the transmission occasion of the first information.

When the communication apparatus 1700 is configured to implement the functions of the terminal in the method embodiment shown in FIG. 12,
a processing unit 1710, configured to determine a time domain configuration of a random access message, where the time domain configuration of the random access message indicates K transmission occasions of the random access message, and K is a positive integer; and
a transceiver unit 1720, configured to: receive third indication information, where the third indication information indicates S transmission occasions in the K transmission occasions, S is a positive integer, and S<K; and send the random access message in one or more transmission occasions in the S transmission occasions.

When the communication apparatus 1700 is configured to implement the functions of the base station in the method embodiment shown in FIG. 12,
a processing unit 1710, configured to determine a time domain configuration of a random access message, where the time domain configuration of the random access message indicates K transmission occasions of the random access message, and K is a positive integer; and
a transceiver unit 1720, configured to: send third indication information, where the third indication information indicates S transmission occasions in the K transmission occasions, S is a positive integer, and S<K; and receive the random access message in one or more transmission occasions in the S transmission occasions.

When the communication apparatus 1700 is configured to implement the functions of the terminal in the method embodiment shown in FIG. 16,
a processing unit 1710, configured to determine a plurality of time domain configurations of a random access message; and
a transceiver unit 1720, configured to: receive fourth indication information, where the fourth indication information indicates a third time domain configuration in the plurality of time domain configurations, and the third time domain configuration indicates a transmission occasion of the random access message; and send the random access message based on the fourth indication information.

When the communication apparatus 1700 is configured to implement the functions of the base station in the method embodiment shown in FIG. 16,
a processing unit 1710, configured to determine a plurality of time domain configurations of a random access message; and
a transceiver unit 1720, configured to: send fourth indication information, where the fourth indication information indicates a third time domain configuration in the plurality of time domain configurations, and the third time domain configuration indicates a transmission occasion of the random access message; and receive the random access message in the transmission occasion of the random access message.

For more detailed descriptions of the processing unit 1710 and the transceiver unit 1720, directly refer to related descriptions of the method embodiment shown in FIG. 2. Details are not described herein again.

As shown in FIG. 18, the communication apparatus 1800 includes a processor 1810 and an interface circuit 1820. The processor 1810 and the interface circuit 1820 are coupled to each other. It may be understood that the interface circuit 1820 may be a transceiver or an input/output interface. Optionally, the communication apparatus 1800 may further include a memory 1830, configured to store instructions executed by the processor 1810, store input data required by the processor 1810 to run the instructions, or store data generated after the processor 1810 runs the instructions.

When the communication apparatus 1800 is configured to implement the method shown in FIG. 2, the processor 1810 is configured to implement the function of the processing unit 1710, and the interface circuit 1820 is configured to implement the function of the transceiver unit 1720.

When the communication apparatus is a chip used in a terminal, the chip in the terminal implements the functions of the terminal in the foregoing method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the communication apparatus is a module used in a base station, the module in the base station implements the functions of the base station in the foregoing method embodiments. The module in the base station receives information from another module (for example, a radio frequency module or an antenna) in the base station, where the information is sent by a terminal to the base station. Alternatively, the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It may be understood that the processor in embodiments of this application may be a central processing unit (Central Processing Unit, CPU) 1710, or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor or the like.

This application provides another example of an apparatus. The notification apparatus includes at least one processor and at least one memory. The at least one processor is coupled to the at least one memory. The at least one memory is configured to store instructions. When the instructions are executed by the at least one processor, the communication apparatus is enabled to perform the method in the foregoing embodiments. For example, the communication apparatus includes one processor and one memory. As shown in FIG. 18, the communication apparatus 1800 includes one processor 1810 and one memory 1830. The processor 1810 is coupled to the memory 1830. The memory 1830 stores instructions. When the instructions stored in the memory 1830 are executed by the processor 1810, the communication apparatus 1800 performs the method performed by the base station or the terminal in the foregoing embodiments.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by software, hardware, firmware, or any combination thereof. When the software is used to implement embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a base station, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise specified or there is a logic conflict, terms and/or descriptions in different embodiments are consistent and may be mutually referenced, and technical features in different embodiments may be combined based on an internal logical relationship thereof to form a new embodiment.

In this application, at least one means one or more, and a plurality of means two or more. The term "and/or" describes an association relationship between associated objects, and indicates that three relationships may exist. For example, A and/or B may represent the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
determining a time domain configuration of first information, wherein the time domain configuration of the first information indicates N transmission occasions of the first information, the first information comprises at least one of system information, paging information, and paging early indication information, and N is a positive integer;
receiving first indication information, wherein the first indication information indicates M transmission occasions in the N transmission occasions, M is a positive integer, and M≤N; and
receiving the first information in one or more transmission occasions in the M transmission occasions.

2. A communication method, wherein the method comprises:
determining a time domain configuration of first information, wherein the time domain configuration of the first information indicates N transmission occasions of the first information, the first information comprises at least one of system information, paging information, and paging early indication information, and N is a positive integer;
determining M transmission occasions in the N transmission occasions, wherein M is a positive integer, and M<N;
sending first indication information, wherein the first indication information indicates the M transmission occasions in the N transmission occasions; and
sending the first information in one or more transmission occasions in the M transmission occasions.

3. The method according to claim 1 or 2, wherein that the first indication information indicates the M transmission occasions in the N transmission occasions is specifically:
the first indication information indicates a configuration of a first time window, and the configuration of the first time window comprises at least one of a periodicity of the first time window, duration of the first time window, and an offset of the first time window; and
the M transmission occasions are transmission occasions that are in the N transmission occasions and that are located in the first time window.

4. The method according to claim 3, wherein the first information is the system information, and the periodicity of the first time window is a system information modification period; or the first information is the paging information, and the periodicity of the first time window is a paging cycle; or the first information is the paging early indication information, and the periodicity of the first time window is a paging early indication period.

5. The method according to claim 1 or 2, wherein that the first indication information indicates the M transmission occasions in the N transmission occasions is specifically:
the first indication information indicates a first transmission occasion pattern, and the first transmission occasion pattern indicates the M transmission occasions in the N transmission occasions.

6. The method according to claim 1 or 2, wherein that the first indication information indicates the M transmission occasions in the N transmission occasions is specifically:
the time domain configuration of the first information indicates the N transmission occasions by using at least one of a first periodicity of the first information, first duration of the first information, and an offset of the first information;
the first indication information indicates a second periodicity of the first information, and the second periodicity of the first information is greater than the first periodicity of the first information; and
the M transmission occasions are transmission occasions determined in the N transmission occasions based on the second periodicity of the first information.

7. The method according to any one of claims 1 to 6, wherein the first indication information is carried on a broadcast channel; or
the first indication information is carried in downlink control information DCI.

8. The method according to any one of claims 1 and 3 to 7, wherein a receiving moment of the first indication information is a first moment; and
receiving the first information in the one or more transmission occasions in the M transmission comprises:
receiving the first information in the one or more transmission occasions in the M transmission occasions after a second moment, wherein the second moment is located in an update periodicity in which the first indication information is located, and the second moment is not earlier than the first moment, or the second moment is located in a next update periodicity after the update periodicity in which the first indication information is located.

9. A communication method, wherein the method comprises:
determining a time domain configuration of a random access message, wherein the time domain configuration of the random access message indicates K transmission occasions of the random access message, and K is a positive integer;
receiving third indication information, wherein the third indication information indicates S transmission occasions in the K transmission occasions, S is a positive integer, and S<K; and
sending the random access message in one or more transmission occasions in the S transmission occasions.

10. A communication method, wherein the method comprises:
determining a time domain configuration of a random access message, wherein the time domain configuration of the random access message indicates K transmission occasions of the random access message, and K is a positive integer;
determining S transmission occasions in the K transmission occasions, wherein S is a positive integer, and S<K;
sending third indication information, wherein the third indication information indicates the S transmission occasions in the K transmission occasions; and
receiving the random access message in one or more transmission occasions in the S transmission occasions.

11. The method according to claim 9 or 10, further comprising:
determining first candidate association information from L pieces of candidate association information based on the third indication information, wherein L is greater than or equal to 2, each of the L pieces of candidate association information indicates at least one of a correspondence between downlink broadcast information and a random access channel RACH occasion, an association period between the downlink broadcast information and the RACH occasion, or a quantity of RACH occasions in one RACH period.

12. The method according to claim 11, wherein the L pieces of candidate association information further comprise second candidate association information; and
a correspondence, between the downlink broadcast information and the RACH occasion, that is indicated by the first candidate association information is the same as a correspondence, between the downlink broadcast information and the RACH occasion, that is indicated by the second candidate association information, and an association period, between the downlink broadcast information and the RACH occasion, that is indicated by the first candidate association information is different from an association period, between the downlink broadcast information and the RACH occasion, that is indicated by the second candidate association information; or
a correspondence, between the downlink broadcast information and the RACH occasion, that is indicated by the first candidate association information is different from a correspondence, between the downlink broadcast information and the RACH occasion, that is indicated by the second candidate association information, and an association period, between the downlink broadcast information and the RACH occasion, that is indicated by the first candidate association information is the same as an association period, between the downlink broadcast information and the RACH occasion, that is indicated by the second candidate association information; or
a correspondence, between the downlink broadcast information and the RACH occasion, that is indicated by the first candidate association information is the same as a correspondence, between the downlink broadcast information and the RACH occasion, that is indicated by the second candidate association information, an association period, between the downlink broadcast information and the RACH occasion, that is indicated by the first candidate association information is the same as an association period, between the downlink broadcast information and the RACH occasion, that is indicated by the second candidate association information, and a quantity, of RACH occasions in one RACH period, that corresponds to the first candidate association information is different from a quantity, of RACH occasions in one RACH period, that corresponds to the second candidate association information.

13. The method according to any one of claims 9 to 12, wherein that the third indication information indicates the S transmission occasions in the K transmission occasions is specifically:
the third indication information indicates a configuration of a second time window, and the configuration of the second time window comprises at least one of a periodicity of the second time window, duration of the second time window, and an offset of the second time window; and
the S transmission occasions in the K transmission occasions are transmission occasions located in the second time window.

14. The method according to any one of claims 9 to 12, wherein that the third indication information indicates the S transmission occasions in the K transmission occasions is specifically:
the third indication information indicates a second transmission occasion pattern, and the second transmission occasion pattern indicates the S transmission occasions in the K transmission occasions.

15. The method according to any one of claims 9 to 12, wherein that the third indication information indicates the S transmission occasions in the K transmission occasions is specifically:
the time domain configuration of the random access message indicates the K transmission occasions by using at least one of a first periodicity of the random access message, first duration of the random access message, and an offset of the random access message;
the third indication information indicates a second periodicity of the random access message, and the first periodicity of the random access message is less than the second periodicity of the random access message; and
the S transmission occasions are transmission occasions determined in the K transmission occasions based on the second periodicity of the random access message.

16. The method according to any one of claims 9 to 15, wherein the third indication information is carried on a broadcast channel; or
the third indication information is carried in DCI.

17. The method according to any one of claims 9 and 11 to 16, wherein a receiving moment of the third indication information is a fifth moment; and
sending the random access message in the one or more transmission occasions in the S transmission occasions comprises:
sending the random access message in the one or more transmission occasions in the S transmission occasions after a sixth moment, wherein the sixth moment is located in an update periodicity in which the third indication information is located, and the sixth moment is not earlier than the fifth moment, or the sixth moment is located in a next update periodicity after the update periodicity in which the third indication information is located.

18. A communication apparatus, comprising a unit or a module configured to perform the method according to any one of claims 1 to 17.

19. A communication apparatus, comprising one or more processors, and the one or more processors are configured to perform the method according to any one of claims 1 to 17.

20. A readable storage medium, wherein the readable storage medium comprises a program; and when the program is run on an apparatus, the apparatus is enabled to perform the method according to any one of claims 1 to 17.

21. A computer program product, wherein the computer program product comprises a computer program or instructions; and when the computer program or the instructions are executed by a communication apparatus, the method according to any one of claims 1 to 17 is implemented.
